# EUROPEAN PATENT APPLICATION

(11) **EP 4 801 170 A1**
(43) Date of publication of application: **02.09.2026**
(21) Application number: 24886218.7
(22) Date of filing: 29.10.2024
(51) Int. Cl.: H04W 72/232, H04W 48/14, H04W 56/00, H04B 17/309

(54) **APPARATUS AND METHOD FOR UTILIZING SYNCHRONIZATION SIGNAL AND PHYSICAL BROADCAST CHANNEL BLOCK TRANSMITTED ON DEMAND IN WIRELESS COMMUNICATION SYSTEM**

(30) Priority: 29.10.2023 US 202363546238 P
(71) Applicant: LG Electronics Inc., Yeongdeungpo-gu Seoul 07336 (KR)
(72) Inventor: KIM, Seonwook, Seoul 06772 (KR); YANG, Suckchel, Seoul 06772 (KR)
(74) Representative: Mooser, Sebastian Thomas
(86) International application number: PCT/KR2024/016693
(87) International publication number: WO 2025/095545

(57) **Abstract**

The purpose of the present disclosure is to utilize a synchronization signal/physical broadcast channel block (SSB) transmitted on demand in a wireless communication system, and a method therefor may comprise the steps of: receiving configuration information related to a transmission configuration indication (TCI), wherein the configuration information includes a first signal as information related to quasi-colocation (QCL); receiving a second signal on a first cell; and receiving a downlink signal or channel on the first cell by applying QCL assumption of the second signal, wherein the second signal may include an on-demand SSB on the first cell.

## Description

### TECHNICAL FIELD

The following description relates to a wireless communication system, and to an apparatus and method for utilizing a synchronization signal/physical broadcast channel block (SSB) transmitted in an on-demand manner in the wireless communication system.

### BACKGROUND ART

The 5G mobile communications system, the successor to long-term evolution (LTE), is a new, clean-slate mobile communications system characterized by high performance, low latency, and high availability. 5G NR may utilize all available spectrum resources, from low-frequency bands below 1 GHz, to mid-frequency bands between 1 GHz and 10 GHz, and to highfrequency bands (e.g., millimeter wave) above 24 GHz. 6G systems are being developed based on the underlying technologies of 5G mobile communications.

The 6G system aims to achieve (i) extremely high data rates per device, (ii) a very large number of connected devices, (iii) global connectivity, (iv) ultra-low latency, (v) reduced energy consumption for battery-free Internet of Things (IoT) devices, (vi) ultra-reliable connectivity, and (vii) connected intelligence with machine learning capability. The vision of the 6G system may include four aspects: intelligent connectivity, deep connectivity, holographic connectivity, and ubiquitous connectivity.

### DISCLOSURE

### TECHNICAL PROBLEM

The present disclosure relates to an apparatus and a method for effectively utilizing a synchronization signal/physical broadcast channel block (SSB) transmitted in an on-demand manner in a wireless communication system.

The present disclosure relates to an apparatus and method for effectively supporting a network energy saving (NES) operation of a base station in a wireless communication system.

The present disclosure relates to an apparatus and method for obtaining time synchronization by using an on-demand SSB in a wireless communication system.

The present disclosure relates to an apparatus and method for estimating path-loss by using an on-demand SSB in a wireless communication system.

The present disclosure relates to an apparatus and method for configuring information related to quasi-colocation (QCL) by using an on-demand SSB in a wireless communication system.

The present disclosure relates to an apparatus and method for providing and configuring information related to a transmission configuration indicator (TCI) by using an on-demand SSB in a wireless communication system.

The present disclosure relates to an apparatus and method for adaptively applying a QCL source according to a situation related to an on-demand SSB in a wireless communication system.

The present disclosure relates to an apparatus and method for selectively using lists related to a TCI according to a situation related to an on-demand SSB in a wireless communication system.

The present disclosure relates to an apparatus and a method for adaptively interpreting information related to a Transmission Configuration Indicator (TCI) state according to a situation associated with an on-demand SSB in a wireless communication system.

The present disclosure relates to an apparatus and method for performing channel state information (CSI) reporting by using an on-demand SSB in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

### TECHNICAL SOLUTION

In one example of the present disclosure, a method may comprise receiving configuration information related to a transmission configuration indication (TCI), wherein the configuration information includes a first signal as information related to quasi-colocation (QCL), receiving a second signal on a first cell, and receiving a downlink signal or channel on the first cell by applying a QCL assumption of the second signal, wherein the second signal may include an on-demand synchronization signal/physical broadcast channel block (SSB) on the first cell.

In one example of the present disclosure, a method may comprise transmitting configuration information related to a transmission configuration indication (TCI), wherein the configuration information includes a first signal as information related to quasi-colocation (QCL), and transmitting a downlink signal or channel on a first cell by applying a QCL assumption of a second signal on the first cell based on transmission of the second signal, wherein the second signal may include an on-demand synchronization signal/physical broadcast channel block (SSB) on the first cell.

In one example of the present disclosure, an apparatus may comprise a transceiver and a processor connected to the transceiver, wherein the processor may be configured to receive configuration information related to a transmission configuration indication (TCI), wherein the configuration information includes a first signal as information related to quasi-colocation (QCL), receive a second signal on a first cell, and receive a downlink signal or channel on the first cell by applying a QCL assumption of the second signal, wherein the second signal may include an on-demand synchronization signal/physical broadcast channel block (SSB) on the first cell.

In one example of the present disclosure, an apparatus may comprise a transceiver and a processor connected to the transceiver, wherein the processor may be configured to transmit configuration information related to a transmission configuration indication (TCI), wherein the configuration information includes a first signal as information related to quasi-colocation (QCL), and transmit a downlink signal or channel on a first cell by applying a QCL assumption of a second signal on the first cell based on transmission of the second signal, wherein the second signal may include an on-demand synchronization signal/physical broadcast channel block (SSB) on the first cell.

In one example of the present disclosure, a UE may comprise at least one processor, and at least one memory connected to the at least one processor and storing instructions that, when executed by the at least one processor, cause the UE to perform operations, wherein the operations comprise receiving configuration information related to a transmission configuration indication (TCI), wherein the configuration information includes a first signal as information related to quasi-colocation (QCL), receiving a second signal on a first cell, and receiving a downlink signal or channel on the first cell by applying a QCL assumption of the second signal, wherein the second signal may include an on-demand synchronization signal/physical broadcast channel block (SSB) on the first cell.

In one example of the present disclosure, a non-transitory computer-readable medium storing at least one program instruction may be provided, wherein the at least one program instruction, when executed by at least one processor, causes a UE to perform operations, wherein the operations comprise receiving configuration information related to a transmission configuration indication (TCI), wherein the configuration information includes a first signal as information related to quasi-colocation (QCL), receiving a second signal on a first cell, and receiving a downlink signal or channel on the first cell by applying a QCL assumption of the second signal, wherein the second signal may include an on-demand synchronization signal/physical broadcast channel block (SSB) on the first cell.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

### ADVANTAGEOUS EFFECTS

According to embodiments based on the present disclosure, the following effects may be obtained.

According to the present disclosure, various functions may be effectively performed by using an on-demand synchronization signal/physical broadcast channel block (SSB).

The effects obtainable from the embodiments of the present disclosure are not limited to those mentioned above, and other effects not explicitly described may be clearly derived and understood by those skilled in the art to which the technical features of the present disclosure are applied, based on the description of the embodiments of the present disclosure below. That is, unintended effects resulting from implementing the configurations described in the present disclosure may also be derived by those skilled in the art from the embodiments of the present disclosure.

### BRIEF DESCRIPTION OF THE DRAWINGS

FIG. 1 illustrates an example of a flexible network topology applicable to the present disclosure.
FIG. 2 illustrates an example of a structure of a wireless communication system applicable to the present disclosure.
FIG. 3 illustrates an example of a wireless device applicable to the present disclosure.
FIG. 4 illustrates an example of a communication procedure between a first node and a second node applicable to the present disclosure.
FIG. 5 illustrates an example of an operation procedure of a base station supporting a network energy saving (NES) technology applicable to the present disclosure.
FIG. 6 illustrates an example of a procedure for a carrier aggregation (CA) operation using a synchronization signal/physical broadcast channel block (SSB)-less SCell (secondary cell) applicable to the present disclosure.
FIGS. 7a to 7c illustrate examples of on-demand system information transmission methods applicable to the present disclosure.
FIG. 8 illustrates an example of beams that may be applied to the present disclosure.
FIG. 9 illustrates an example of a downlink beam management (DL BM) procedure using a synchronization signal block (SSB) that may be applied to the present disclosure.
FIG. 10 illustrates an example of a DL BM procedure using a channel state information-reference signal (CSI-RS) that may be applied to the present disclosure.
FIG. 11 illustrates an example of a procedure for determining a reception beam of a UE that may be applied to the present disclosure.
FIG. 12 illustrates an example of a procedure for determining a transmission beam of a base station that may be applied to the present disclosure.
FIG. 13 illustrates an example of resource allocation in a time domain and a frequency domain that may be applied to the present disclosure.
FIG. 14 illustrates an example of beam sweeping for uplink beam management (UL BM) using a sounding reference signal (SRS) that may be applied to the present disclosure.
FIG. 15 illustrates an example of a UL BM procedure using an SRS that may be applied to the present disclosure.
FIG. 16 is a flowchart illustrating an example of a CSI-related procedure.
FIG. 17 illustrates examples of frequency bands operated by a base station according to one embodiment of the present disclosure.
FIG. 18 illustrates an example of a procedure for utilizing an on-demand SSB in a wireless communication system according to an embodiment of the present disclosure.
FIG. 19 illustrates an example of a procedure for performing time synchronization of an SSB-less cell in a wireless communication system according to an embodiment of the present disclosure.
FIG. 20 illustrates an example of a procedure for performing time synchronization of an SSB-less cell in a wireless communication system according to an embodiment of the present disclosure.
FIG. 21 illustrates an example of a procedure for configuring a parameter indicating channel relevance of an SSB-less cell in a wireless communication system according to an embodiment of the present disclosure.
FIG. 22 illustrates an example of a procedure for receiving a signal by using a QCL assumption in a wireless communication system according to an embodiment of the present disclosure.
FIG. 23 illustrates an example of a procedure for applying a channel relevance parameter based on a QCL source in a wireless communication system according to an embodiment of the present disclosure.
FIG. 24 illustrates an example of a procedure for utilizing an on-demand SSB in an SSB-less cell in a wireless communication system according to an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present disclosure may indicate "for example". Specifically, when expressed as "control information (ABC)", "ABC" may be described as an example of the "control information". For example, "control information" may also include DEF as another example. In other words, the "control information" of the present disclosure is not limited to "ABC", and "ABC" may be described merely as an example of the "control information". In addition, even when expressed as "control information (i.e., ABC)" "ABC" may be described as an example of the "control information".

In addition, the terms "first", "second", and the like used in the present disclosure are only for the purpose of distinguishing one component from another and are not used to limit the components, and unless otherwise specified, do not limit the order, importance, or the like among the components. Therefore, the first component in one embodiment of the present disclosure may be referred to as the second component in another embodiment, and likewise, the second component in one embodiment may be referred to as the first component in another embodiment.

In the following description, 'when, if, or in case of' may be replaced with 'based on'.

A technical feature described individually in one figure in the present disclosure may be individually implemented, or may be simultaneously implemented.

In the present disclosure, a terminal refers to a user-side device (user equipment, UE) or a consumer-side device, and may also be referred to as a first node that receives or transmits a signal from or to a base station/a second node/an integrated access and backhaul (IAB) node, or a transmission-reception point (TRP). The terminal may correspond to a physical node or a logical node. The terminal may correspond to a user-side endpoint or to an intermediate point between other endpoints. In communication between two points that are not limited to endpoints (including one-to-one, many-to-one, one-to-many, and many-to-many communication), the terminal may correspond to a served node. The terminal may be a node with a fixed location or a node whose location is not fixed (i.e., a mobile node).

In the present disclosure, a base station (BS) refers to a network-side device and may also be referred to as a second node, an IAB node, an x-nodeB (x-NodeB, where x may be an abbreviation related to a radio access technology (RAT)), or a transmission-reception point (TRP). The base station may correspond to a physical node or a logical node. The base station may correspond to a network-side endpoint or to an intermediate point between other endpoints. In communication between two points that are not limited to endpoints (including one-to-one, many-to-one, one-to-many, and many-to-many communication), the base station may correspond to a serving node. The base station may be a node with a fixed location or a node whose location is not fixed.

In the present disclosure, a higher layer parameter may be configured for, pre-configured for, or predefined for a UE. For example, a base station may transmit a higher layer parameter to the UE. For example, the UE may transmit a parameter such as capability to the base station as a higher layer parameter. For example, the higher layer parameter may be transmitted through radio resource control (RRC) signaling or medium access control (MAC) signaling.

In the present disclosure, when information/state/parameter is "configured or pre-configured", it may be interpreted as information/state/parameter being provided or pre-provided to the UE through predefined signaling (e.g., SIB, MAC, RRC) from the base station. In the present disclosure, when information/state/parameter is "defined or pre-defined", it may be interpreted as information/state/parameter being already known or stored in advance at both the base station and the UE without signaling between the base station and the UE.

The technology described in the present disclosure may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA), and so on. The CDMA may be implemented with a radio technology such as universal terrestrial radio access (UTRA) or CDMA2000. The TDMA may be implemented with a radio technology such as global system for mobile communications (GSM)/general packet radio service (GPRS)/enhanced data rates for GSM evolution (EDGE). The OFDMA may be implemented with a radio technology such as Institute of Electrical and Electronics Engineers (IEEE) 802.11 (Wi-Fi), IEEE 802.16 (WiMAX), IEEE 802.20, evolved UTRA (E-UTRA), long term evolution (LTE), or 5G new radio (NR).

The technology described in the present disclosure may be implemented as 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

### A. 6G network architecture

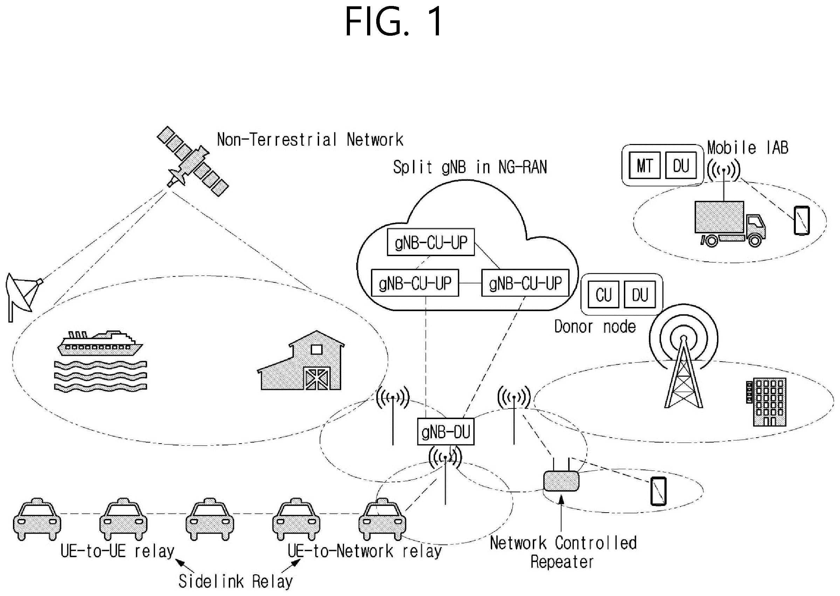

FIG. 1 illustrates an example of a flexible network topology applicable to the present disclosure.

To compensate for incomplete areas of network coverage, a split radio access network (RAN) topology that is more flexible and resilient may be considered. For this purpose, various nodes such as IAB nodes, relays, and RF repeaters as illustrated in FIG. 1 may be applied, and NTN (non-terrestrial network) may also be integrated. For example, an IAB node may correspond to a node providing a wireless backhaul. For example, a relay may refer to any intermediate point, and in the case of a sidelink relay in which a UE functions as a relay, it may collectively refer to a UE-to-network (U2N) relay and a UE-to-UE (U2U) relay. For example, an RF repeater may correspond to a node that performs simple signal amplification and forwarding, and in the case of a network-controlled repeater, it may not only perform signal amplification and forwarding but also adjust transmission and reception configuration based on information provided from the network. For example, an NTN node may correspond to a satellite or aerial vehicle that provides NTN coverage difficult to be provided by a terrestrial network. In addition to these examples, various other intermediate points may be introduced to improve the network topology.

Referring to FIG. 1, the split RAN may support division of a base station into one centralized unit (CU) and one or more distributed units (DUs). The CU and DU may correspond to logical units. The CU may be further divided into a control plane (CP) part and one or more user plane (UP) parts. A failure in the CU-CP may affect not only the CU-UP but also the DU, and therefore, various intermediate points may be introduced to compensate for this.

An intermediate point may correspond to a UE or a base station depending on its relative relationship with other nodes. For example, an IAB node may include a mobile termination (MT) part and a DU. The MT may connect the IAB node to a donor node. The DU of the IAB node may serve other UEs or connect to another IAB node to provide multi-hop wireless backhaul to UEs. That is, the IAB node may correspond to a base station in relation to a user-side node, and may correspond to a UE in relation to a network-side node.

In some examples of the present disclosure, the description of a UE may be equally applied not only to a user-side endpoint but also to an intermediate point that corresponds to a UE in relation to a network-side endpoint. Similarly, in some examples of the present disclosure, the description of a base station may be equally applied not only to a network-side endpoint but also to an intermediate point that corresponds to a base station in relation to a user-side endpoint. However, in most cases where no additional explanation is provided for operations among three or more entities, the communication entities in the present disclosure are briefly described by the terms UE and/or base station (or first node and/or second node), where the terms UE and/or base station (or first node and/or second node) are interpreted as including or substituting any endpoint or intermediate point depending on the relationship with other nodes.

That is, in some examples of the present disclosure, for the sake of simplicity of description, the subject of an operation may be referred to as a base station and/or a UE (or a first node and/or a second node). In addition, the terms base station and/or UE (or first node and/or second node) may be interpreted or substituted as follows: for example, the base station (or first node) and the UE (or second node) may respectively correspond to a first endpoint and a second endpoint; may respectively correspond to an endpoint and an intermediate point; may respectively correspond to an intermediate point and an endpoint; or may respectively correspond to a first intermediate point and a second intermediate point.

In the present disclosure, there may be no intermediate point or one or more intermediate points between the base station and the UE. When an intermediate point exists, the intermediate point may correspond to an IAB node, a relay, an RF repeater, a non-terrestrial network (NTN) node, or a node supporting other functions. The intermediate point may be a node with a fixed location or a node whose location is not fixed.

### Systems applicable to this disclosure

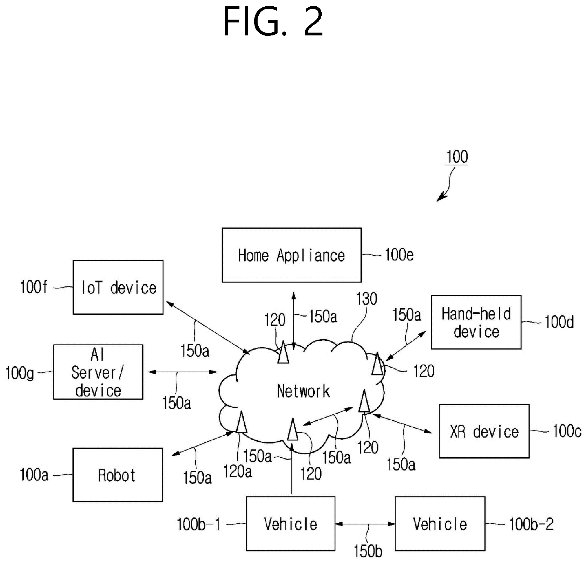

FIG. 2 illustrates an example of a structure of a wireless communication system applicable to the present disclosure. The communication system 100 of FIG. 2, to which the present disclosure is applied, includes a wireless device 110, a network device 120, and a network 130. Here, the wireless device 110 refers to a device that performs communication using a radio access technology (e.g., LTE, LTE-A, LTE-A Pro, NR, 5G, 5G-A, 6G) and may be referred to as a communication/radio/5G/6G device. Without being limited thereto, the wireless device 110 may include a robot 110a, vehicles 110b-1 and 110b-2, an extended reality (XR) device 110c, a hand-held device 110d, a home appliance 110e, an Internet of Things (IoT) device 110f, and an artificial intelligence (AI) device/server 110g. For example, the vehicles may include vehicles equipped with wireless communication capability, autonomous vehicles, or vehicles capable of performing vehicle-to-vehicle communication, and the vehicles 110b-1 and 110b-2 may include unmanned aerial vehicles (UAVs) such as drones. The XR device 110c may include augmented reality (AR), virtual reality (VR), or mixed reality (MR) devices and may be implemented in the form of a head-mounted device (HMD), a head-up display (HUD) mounted in a vehicle, a television, a smartphone, a computer, a wearable device, a home appliance, digital signage, a vehicle, or a robot. The hand-held device 110d may include a smartphone, a smart pad, a wearable device (e.g., smart watch, smart glasses), or a computer (e.g., laptop, etc.). The home appliance 110e may include a TV, refrigerator, or washing machine. The IoT device 110f may include sensors or smart meters. The wireless device 110 may correspond to a UE (or a first node) or an intermediate point. The network device 120 may correspond to a base station (or a second node) or another intermediate point. For example, the network device 120 may also be implemented as a wireless device 110, and a specific wireless device 120a may operate as the network device 120 for another wireless device 110.

The wireless devices 110a to 110f may be connected to the network 130 through the network device 120. AI technology may be applied to the wireless devices 110a to 110f, and the wireless devices 110a to 110f may be connected to an AI server 110g through the network 130. The network 130 may be configured using a 3G network, a 4G (e.g., LTE) network, a 5G (e.g., NR) network, or a 6G network. The wireless devices 110a to 110f may communicate with each other through the network device 120/the network 130, but may also communicate directly (e.g., through sidelink communication) without passing through the network device 120/the network 130. For example, the vehicles 110b-1 and 110b-2 may perform direct communication (e.g., vehicle-to-vehicle (V2V) or vehicle-to-everything (V2X) communication). In addition, the IoT device 110f (e.g., a sensor) may perform direct communication with another IoT device (e.g., another sensor) or with another wireless device 110a to 110f.

Wireless communication/connection 150a, 150b, 150c may be established between wireless devices 110a to 110f and a network device 120, and between network devices 120. Here, the wireless communication/connection may be established through various wireless access technologies such as uplink/downlink communication 150a, sidelink communication 150b (or D2D communication), and communication between network devices 150c (e.g., relay, integrated access backhaul (IAB)). Through the wireless communication/connection 150a, 150b, 150c, the wireless device and the network device/wireless device, and the network device and the network device may transmit and receive wireless signals with each other. For example, the wireless communication/connection 150a, 150b, 150c may transmit and receive signals through various physical channels. To this end, based on various descriptions of the present disclosure, at least a part of various configuration information configuring processes for transmitting/receiving wireless signals, various signal processing processes (e.g., channel encoding/decoding, modulation/demodulation, resource mapping/demapping, etc.), and resource allocation processes may be performed.

### Device applicable to the present disclosure

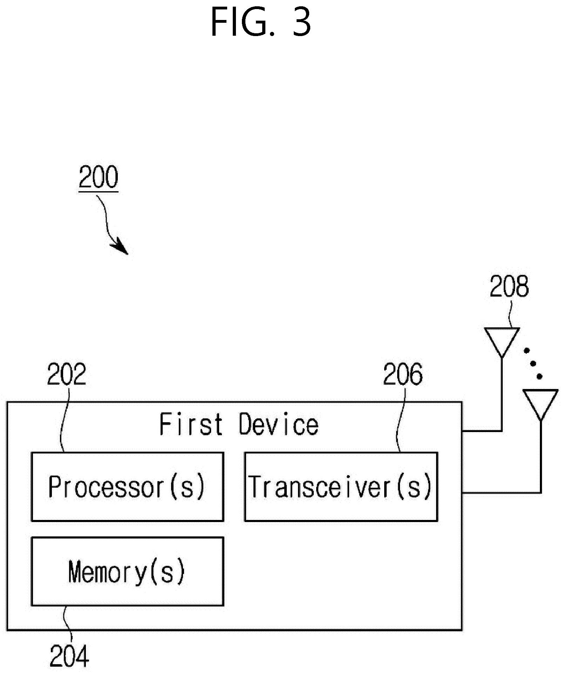

FIG. 3 illustrates an example of a wireless device applicable to the present disclosure.

Referring to FIG. 3, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 3, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device described with reference to FIG. 3 may be understood as at least a part of the structure of various devices. For example, the structure of the wireless device illustrated in FIG. 3 may correspond to at least a part of the various devices described with reference to FIG. 2 (e.g., a robot 110a, vehicles 110b-1 and 110b-2, an XR device 110c, a portable device 110d, a home appliance 110e, an IoT device 110f, and an AI device/server 110g). Furthermore, depending on various embodiments, the device may further include other components in addition to those illustrated in FIG. 3.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output apparatus for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks.

The structure of the wireless device illustrated in FIG. 3 may be understood as being a part of a UE (or a first node), a part of an intermediate point, or a part of a base station (or a second node). When the device illustrated in FIG. 3 is the base station (or the second node), the device may further include a wired transceiver for front haul and/or back haul communication. However, when the front haul and/or back haul communication is based on wireless communication, at least one transceiver 206 illustrated in FIG. 3 may be used for the front haul and/or back haul communication, and the wired transceiver may not be included.

### B. Communication Procedures

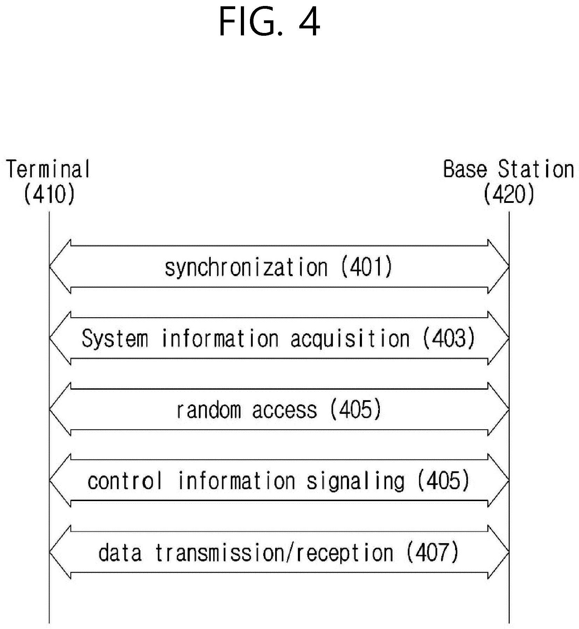

FIG. 4 illustrates an example of a communication procedure between a first node (e.g., a UE) and a second node (e.g., a base station) applicable to the present disclosure. The second node of FIG. 1 may support dynamic spectrum sharing (DSS) and may provide connection not only to nodes where 6G technology is implemented but also to nodes where pre-6G wireless communication (e.g., 5G, 4G) technology is implemented. That is, the first node of FIG. 1 may implement 6G technology or may implement pre-6G wireless communication (e.g., 5G, 4G) technology. In addition, the first node and/or the second node may support not only a non-overlapping full duplex mode but also a full duplex mode.

In FIG. 4, for simplicity of description, the first node and the second node are assumed to be a UE and a base station, respectively, and operations in which the UE 440 and the base station 420 transmit and/or receive data and operations performed prior thereto are illustrated. However, the operation of FIG. 1 is not limited to the operation between the UE and the base station, and may be interpreted as the operation between the first node and the second node. In addition, although FIG. 1 illustrates a direct wireless signal transmission/reception operation between the UE 440 and the base station 420, one or more intermediate points may exist between the UE 440 and the base station 420, and the wireless signal may be transmitted and received through one or more intermediate points.

Referring to FIG. 4, in step 401, the UE 440 and the base station 420 perform synchronization. For example, the UE 440 may perform an initial cell search operation. Specifically, the UE 440 may detect at least one synchronization signal for base station connection, which is transmitted from the base station 420 according to a predefined rule. Here, the synchronization signal may include a plurality of synchronization signals (e.g., a first synchronization signal (for example, a primary synchronization signal), a second synchronization signal (for example, a secondary synchronization signal), etc.) classified according to structure or purpose. Through this, the UE 440 may identify a boundary of a unit (e.g., a frame, subframe, slot, and/or symbol) configuring wireless signal transmission of the base station 420, and may obtain information related to the base station 420 (e.g., a cell identifier).

In step 403, the UE 440 obtains system information transmitted from the base station 420. The system information is information related to attributes, characteristics, and/or capabilities of the base station 420, which are required for the UE to access the base station 420 and use services, and may be classified according to content (e.g., whether it is essential for access), transmission structure (e.g., which channel is used, whether it is provided on-demand), and the like, for example, the system information may be classified into first system information (e.g., a master information block (MIB), primary system information) and second system information (e.g., a system information block (SIB), secondary system information). If necessary, the UE 440 may transmit a signal requesting the system information before receiving the system information. However, the request and provision of the system information may be performed after a random access procedure described below.

In step 405, the UE 440 and the base station 420 perform a random access procedure. The UE 440 may transmit and/or receive at least one message (e.g., a random access preamble, a random access response (RAR) message, etc.) for the random access procedure based on information related to a channel (e.g., channel location, channel structure, structure of supported preambles, etc.) for the random access procedure of the base station 420 obtained through the system information. For example, the UE 440 may transmit a first message (e.g., a preamble, MSG1) through a channel for the random access procedure, receive a second message (e.g., an RAR message, MSG2), transmit a third message (e.g., MSG3) including information related to the UE 440 (e.g., identification information) to the base station 420 by using scheduling information included in the second message, and receive a fourth message (e.g., MSG4) for contention resolution and/or connection establishment. In another example, the first message and the third message may be transmitted and received as a single message, or the second message and the fourth message may be transmitted and received as a single message.

In step 407, the UE 440 and the base station 420 perform signaling of control information. Here, the control information may be defined in various layers such as a layer for controlling connection (e.g., a radio resource control (RRC) layer), a layer for processing mapping between logical channels and transport channels (e.g., a media access control (MAC) layer), and a layer for processing physical channels (e.g., a physical (PHY) layer). For example, the UE 440 and the base station 420 may perform at least one of signaling for establishing a connection, signaling for determining configurations related to communication, and signaling for indicating allocated resources.

In step 409, the UE 440 and the base station 420 transmit and/or receive data. In other words, the UE 440 and the base station 420 may process and transmit and/or receive data based on the signaling of control information. For example, when transmitting data, the UE 440 or the base station 420 may perform at least one of channel encoding, rate matching, scrambling, constellation mapping, layer mapping, waveform modulation, antenna mapping, and resource mapping on information bits. Conversely, when receiving data, the UE 440 or the base station 420 may perform at least one of signal extraction from a resource, waveform demodulation per antenna, signal arrangement considering layer mapping, constellation demapping, descrambling, and channel decoding.

### [Blank]

### C. Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.
1. When it is determined to be possible in the RAN4 study, specify SSB-less SCell operation for Inter-band CA for FR1 and co-located cells, where the UE measures the SSB transmitted from a PCell or another SCell for time/frequency synchronization (including downlink AGC) and L1/L3 measurement of the SCell, and includes potential enhancements for the SCell activation procedure if necessary. [RAN4, RAN2]
2. Specify enhancements to the Cell DTX/DRX mechanism, including inter-node information exchange for Cell DTX/DRX and alignment of Cell DTX/DRX with UE DRX in RRC_CONNECTED mode. [RAN2, RAN1, RAN3]
   Note: No change to SSB transmission due to Cell DTX/DRX.
   Note: Any impact on IDLE/INACTIVE UEs due to the above enhancement should be avoided.
3. Specify techniques in the spatial and power domains as follows:
   Specify necessary enhancements to CSI and beam management related procedures, including measurement and reporting, and signaling, to enable efficient adaptation of spatial elements (e.g., antenna ports, active transceiver chains). [RAN1, RAN2]
   Specify necessary enhancements to CSI related procedures, including measurement and reporting, and signaling, to enable efficient adaptation of the power offset value between PDSCH and CSI-RS. [RAN1, RAN2]
   Note: The above goals are only for UE-specific channels/signals.
   Note: Considering the total number and requirements of total CSI reports, conventional UE CSI/CSI-RS capabilities apply.
4. Specify a mechanism to prevent conventional UEs from camping on cells adopting Rel-18 NES technology, if necessary. [RAN2]
5. Specify CHO (Conditional Handover) procedure enhancements when the source/target cell is in NES mode. [RAN2]
6. Specify enhancements for limiting paging in restricted areas and inter-node beam activation. [RAN3].
7. Specify corresponding RRM/RF core requirements for the above features, if necessary. [RAN4]

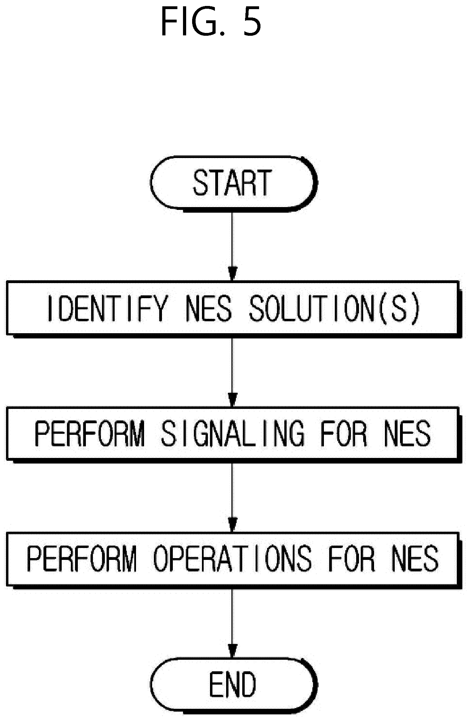

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain. FIG. 5 illustrates an example of an operation procedure of a base station supporting an NES technology applicable to the present disclosure. Referring to FIG. 5, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 5, the NES technology may be performed. Examples of NES solutions that may be performed through a procedure such as that of FIG. 5 are as follows.
- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

### SSB-less SCell

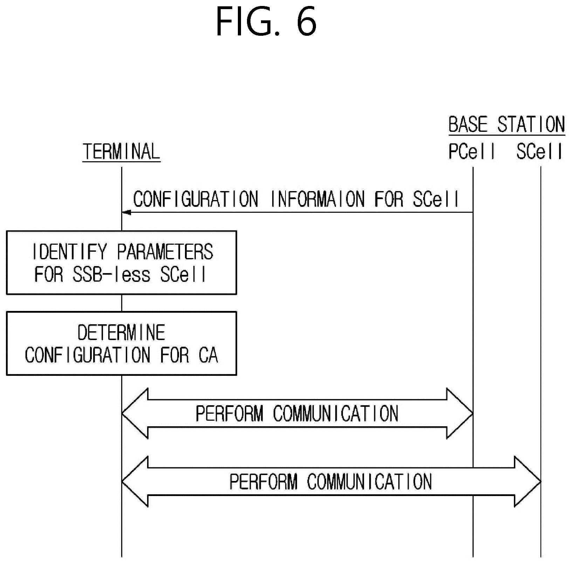

FIG. 6 illustrates an example procedure for CA operation using an SSB-less SCell applicable to the present disclosure. Referring to FIG. 6, a base station transmits configuration information for the SCell to the UE. That is, the base station transmits configuration information for CA to provide service through CA operation to the UE. Here, the CA operation may be intra-band CA or inter-band CA. For example, the configuration information for the SCell may include information containing information for adding the SCell (e.g., sCellToAddModList), and specifically, may include a cell index, a physical cell identifier, information related to DL-UL configuration, information related to BWP, information related to Cell DTX/DRX, information related to downlink frequency (e.g., FrequencyInfoDL), and so on. Subsequently, the UE determines the configuration for CA operation and may perform communication using the PCell and SCell of the base station. In this case, the UE can confirm that the SCell is an SSB-less SCell based on the information related to the downlink frequency included in the configuration information, and can confirm related parameters. For example, the UE determines that the SCell is an SSB-less SCell by confirming the existence of a parameter (e.g., SSBlessSCell) indicating the SSB-less SCell, and can confirm the timing reference and AGC source for the SCell based on information about the reference cell (e.g., referenceCell). In the case of FIG. D03, the reference cell may be the PCell. Therefore, the UE may use the PCell as the timing reference and AGC source for communication in the SCell.

### [Blank]

In 3GPP NR Release 19, a work item called "Enhancements of network energy savings for NR" has been additionally approved. Specifically, the following enhancement techniques are being considered in 3GPP NR Release 19, as shown below.

### Objectives of SI (Study Item) or Core Part WI (Work Item) or Test Part WI

The objectives of the WI are as follows:
1. Specify procedures and signaling methods to support on-demand SSB SCell operation for both intra-band and inter-band CA for UEs in connected mode configured with CA. [RAN1/2/3/4]
   - Specify triggering method(s). (Select among: UE uplink wake-up signal using existing signals/channels, cell on/off indication via backhaul, and SCell activation/deactivation signaling)
   - Note 1: On-demand SSB transmission can be used by the UE for at least SCell time/frequency synchronization, L1/L3 measurements, and SCell activation, and is supported for FR1 and FR2 in non-shared spectrum.
2. Study procedures and signaling method(s) to support on-demand SIB1 for UEs in Idle/Inactive mode as follows: [RAN1/2/3]
   - Triggering method by an uplink wake-up signal using existing signals/channels.
   - Providing wake-up signal configuration to the UE.
      - Note: Modification of SSB is not discussed in this objective.
   - Inter-gNB information exchange for at least the configuration of the wake-up signal, if necessary.
   - Checkpoint for normative work at RAN#105.
3. Specify adaptation of common signal/channel transmissions. [RAN1/2/3/4]
   - Adaptation of SSB in the time domain, e.g., periodicity adaptation.
   - Adaptation of PRACH in the time domain.
   - Adaptation of PRACH in the spatial domain, e.g., study non-uniform PRACH resources per SSB, and specify if identified as beneficial.
      - This study will be conducted only during Q2 2024.
   - Adjustment of paging occasions, including limiting paging occasions in the time domain.
      - Note: Paging latency shall not increase.
      - Note: There should be no negative impact on legacy UEs unless a significant benefit is demonstrated.
4. Specify the corresponding core requirements for the above features. [RAN4]

### On-demand SSB

Based on the aforementioned Objective 1, a method to reduce energy consumption can be discussed, wherein a base station transmits an SSB on a specific cell through an on-demand SSB procedure and does not transmit the SSB on the corresponding cell if the on-demand SSB procedure is not present. In the legacy NR system, since the SSB had to be transmitted periodically at all times for purposes such as time/frequency synchronization or RRM measurement, it was difficult to reduce energy consumption even when the base station had no data to receive or transmit. Considering this, the base station can reduce its energy consumption by not performing SSB transmission and instead performing SSB transmission only when an on-demand SSB procedure is involved. The corresponding on-demand SSB procedure can be triggered through one of the following methods:
1) A UE transmits an uplink signal/channel (e.g., PRACH, PUCCH, PUSCH, SRS, etc., in the NR system) to request the base station to transmit the SSB.
2) A request for SSB transmission is made from Base Station (or TRP) #1 to Base Station (or TRP) #2 through an interbase station interface (e.g., Xn interface in the NR system) or backhaul signaling.
3) Signaling whether to transmit the SSB for a corresponding SCell through SCell activation/deactivation signaling.

Considering coexistence with legacy NR UEs, the operation in Release 19 is limited to on-demand SSB operation for UEs in connected mode and SCells. However, in future releases or next-generation communication systems, on-demand SSB operation (for SSB transmission on a PCell) considering UEs in inactive or idle mode, or UEs for initial access, may be defined. Additionally, carrier aggregation (CA) including the corresponding SCell can be applied to both intra-band CA and inter-band CA. The SSB on the corresponding SCell transmitted through the on-demand SSB procedure can be utilized for functionalities such as at least time/frequency synchronization, L1/L3 measurement, and SCell activation.

### On-demand SIB1 transmission

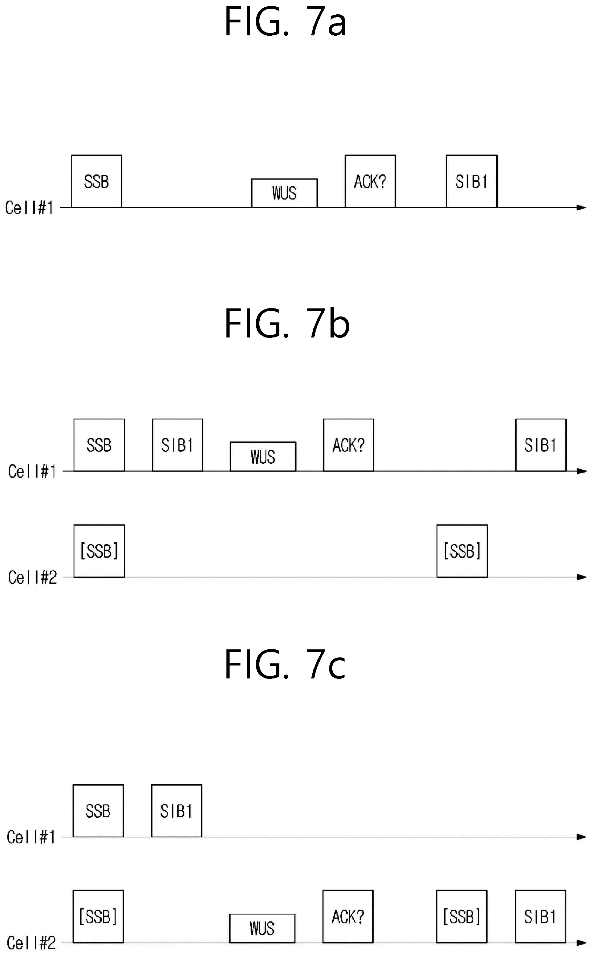

Through Objective 2 above, a method for reducing energy consumption can be discussed, wherein a base station transmits SIB1 for a specific cell through an on-demand SIB1 procedure and does not transmit SIB1 for the corresponding cell when the on-demand SIB1 procedure is not present. In the legacy NR system, since the base station had to periodically provide SIB1, which includes system information and random access information for initial access or for UEs in idle mode to access a cell, it was difficult to reduce energy consumption even when there was no data to receive or transmit. Considering this, the base station can reduce its energy consumption by not performing SIB1 transmission and only performing SIB1 transmission when an on-demand SIB1 procedure is involved. The corresponding on-demand SIB1 procedure can be triggered by a UE transmitting an uplink signal/channel (e.g., PRACH in the NR system), and specifically, the following scenarios may be considered, but it may not be limited thereto:
1) Scenario 1: As shown in Figure 7a, a UE that recognizes that SIB1 is not transmitted on cell #1 by receiving an SSB (and/or other DL signals/channels) from the cell #1 can trigger SIB1 transmission by transmitting a signal requesting SIB1 (referred to as a WUS, wake-up signal, for convenience in the present disclosure) based on information provided in the SSB (and/or other DL signals/channels) and/or pre-established information. Upon receiving the WUS, the base station may transmit a specific DL signal/channel on cell #1 as a response thereto, and (with or without transmitting the DL signal/channel) may transmit SIB1 on cell #1.
2) Scenario 2: As shown in Figure 7b, a UE that recognizes that SIB1 is not transmitted on cell #2 by receiving an SSB (and/or other DL signals/channels such as SIB1) from cell #1 may attempt to camp-on via cell #2. The UE may trigger SIB1 transmission for cell #2 by transmitting a signal requesting SIB1 (i.e., WUS) on cell #1 based on information provided in the received SSB (and/or other DL signals/channels such as SIB1) and/or pre-established information. Upon receiving the WUS, the base station may transmit a specific DL signal/channel (on cell #1 or cell #2) as a response thereto, and (with or without transmitting the DL signal/channel) may transmit SIB1 for cell #2 on cell #1 or cell #2.
3) Scenario 3: As shown in Figure 7c, a UE that recognizes that SIB1 is not transmitted on cell #2 by receiving an SSB (and/or other DL signals/channels such as SIB1) from cell #1 may attempt to camp-on via cell #2. The UE may trigger SIB1 transmission for cell #2 by transmitting a signal requesting SIB1 (i.e., WUS) on cell #2 based on information provided in the received SSB (and/or other DL signals/channels such as SIB1) and/or pre-established information. Upon receiving the WUS, the base station may transmit a specific DL signal/channel (on cell #1 or cell #2) as a response thereto, and (with or without transmitting said DL signal/channel) may transmit SIB1 for cell #2 on cell #1 or cell #2.

### Adaptation of Common Signal/Channel Transmissions

Through Objective 3 above, a method for reducing energy consumption by allowing a base station to control transmission of common signals/channels, such as an SSB, a PRACH, and paging, may be discussed. As in Objective 1 above, when the SSB is completely turned off, energy consumption of the base station may be significantly reduced. However, if there is no SSB that performs functions such as time/frequency synchronization or radio resource management (RRM) measurement, stable operation for a corresponding cell may not be guaranteed from the perspective of a UE. In consideration of this, an energy saving effect of the base station may be obtained by changing a transmission pattern of the SSB according to a situation. For example, the transmission pattern of the SSB may include at least one of a transmission periodicity, a periodicity for each SSB candidate index(es), SSB candidate index(es) transmitted within one transmission period, or transmission power.

In the case of PRACH resources, for example, in contention based random access, since a UE does not know when to transmit a PRACH, the base station always attempts reception on configured PRACH resources, and accordingly energy consumption may increase. In consideration of this, energy of the base station may be saved by adjusting an amount of PRACH resources. For example, the amount of RACH resources may be adjusted by adjusting a periodicity of PRACH resources, by pre-configuring PRACH resource set #1 and set #2 and indicating whether only one of the two sets is turned on or both of the two sets are turned on, or by providing, for each SSB index, a corresponding amount of RACH resources in a uniform manner or a non-uniform manner.

In the case of paging, conventionally, a paging frame (PF) and/or a paging occasion (PO) is distributed on a time axis within a discontinuous reception (DRX) cycle or a paging cycle, and a UE attempts reception of paging in a specific PF and/or PO derived based on an ID of the UE. Accordingly, from the perspective of the base station, when paging is to be simultaneously transmitted to a plurality of UEs, the base station may frequently wake up and transmit paging. As a method for reducing energy consumption of the base station due to this, it may be considered to arrange the PF and/or PO for paging reception as close as possible on the time axis, or to differently arrange resources on a frequency axis within the same time.

### [Blank]

### E-1. Beam Management (BM)

A BM procedure is an L1 (layer 1)/L2 (layer 2) procedure for acquiring and maintaining a set of beams of a base station (for example, gNB, TRP, or the like) and/or a UE that may be used for downlink (DL) and uplink (UL) transmission/reception, and may include the following procedures and terms.
- beam measurement: an operation in which the base station or the UE measures characteristics of a received beamformed signal.
- beam determination: an operation in which the base station or the UE selects its transmission beam (Tx beam) / reception beam (Rx beam)
- Beam sweeping: an operation of covering a spatial domain by using a transmission beam and/or a reception beam during a predetermined time interval in a predetermined manner.
- beam report: an operation in which the UE reports information on a beamformed signal based on beam measurement.

The BM procedure may be divided into (1) a DL BM procedure using an SS (synchronization signal)/PBCH (physical broadcast channel) block or a CSI-RS, and (2) a UL BM procedure using an SRS (sounding reference signal).

Also, each BM procedure may include Tx beam sweeping for determining a Tx beam and Rx beam sweeping for determining an Rx beam.

### [Blank]

### <DL BM>

The DL BM procedure may include (1) transmission of beamformed DL reference signals (RSs) (for example, a CSI-RS or an SS block (SSB)) of the base station, and (2) beam reporting of the UE.

Here, the beam reporting may include preferred DL RS ID(s) (identifier(s)) and L1-RSRP (Reference Signal Received Power) corresponding thereto.

The DL RS ID may be an SSBRI (SSB Resource Indicator) or a CRI (CSI-RS Resource Indicator).

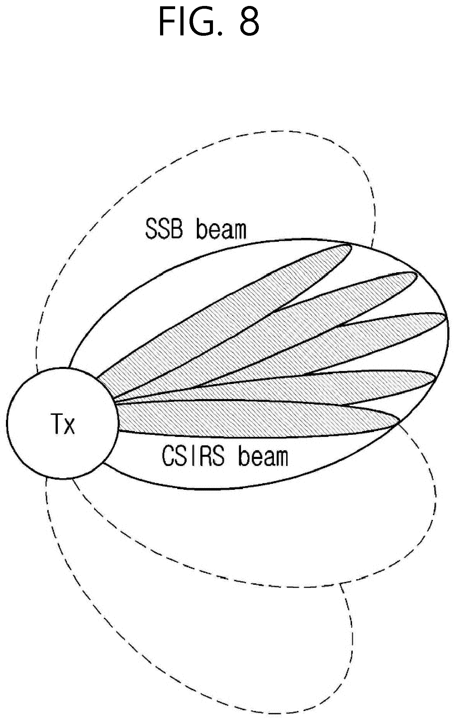

As shown in FIG. 8, an SSB beam and a CSI-RS beam may be used for beam measurement. A measurement metric is L1-RSRP for each resource/block. The SSB is used for coarse beam measurement, and the CSI-RS may be used for fine beam measurement. The SSB may be used for both Tx beam sweeping and Rx beam sweeping.

Rx beam sweeping using the SSB may be performed for the same SSBRI while the UE changes an Rx beam across a plurality of SSB bursts. Here, one SS burst includes one or more SSBs, and one SS burst set includes one or more SSB bursts.

### [Blank]

### <DL BM Using SSB>

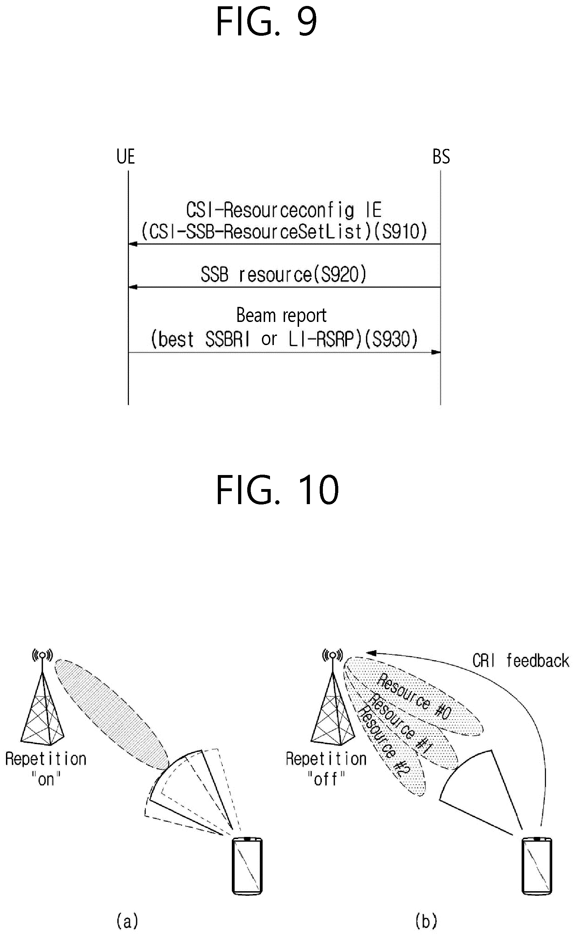

FIG. 9 is a flowchart illustrating an example of a DL BM procedure using an SSB.

Configuration for a beam report using the SSB is performed during CSI/beam configuration in an RRC connected state (or RRC connected mode).

The UE receives, from the base station, a CSI-ResourceConfig information element (IE) including a CSI-SSB-ResourceSetList including SSB resources used for BM (S910).

[Table 1] shows an example of the CSI-ResourceConfig IE. As shown in [Table 1], BM configuration using the SSB is not separately defined, and configures the SSB like a CSI-RS resource.

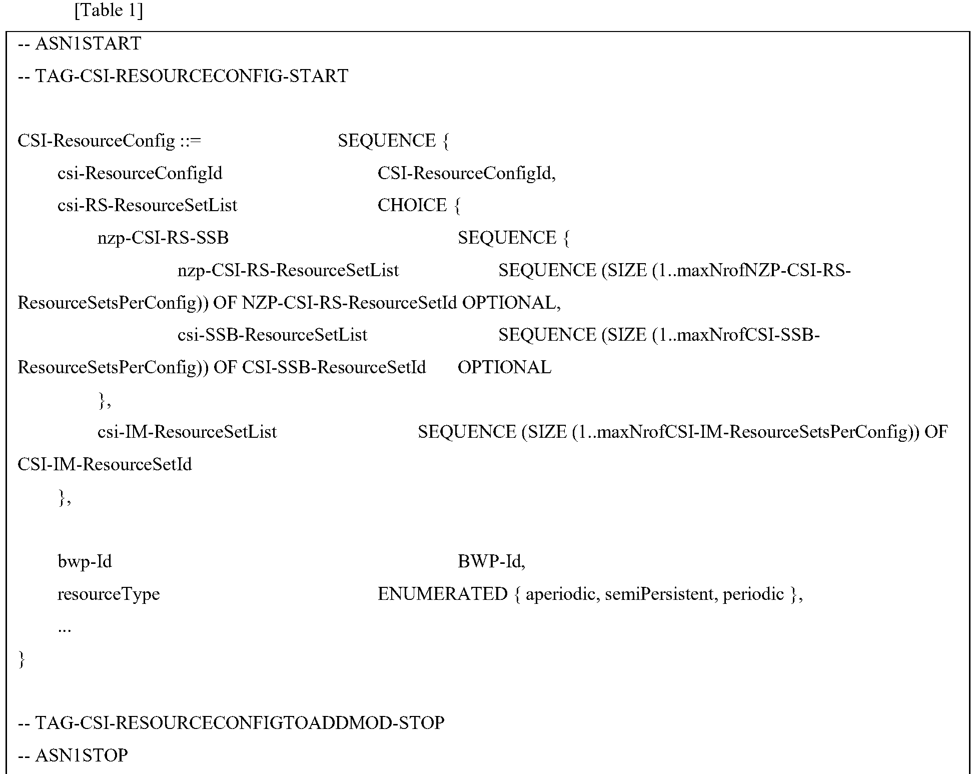

In [Table 1], a csi-SSB-ResourceSetList parameter indicates a list of SSB resources used for beam management and reporting in one resource set. Here, the SSB resource set may be configured as {SSBx1, SSBx2, SSBx3, SSBx4, ...}. An SSB index may be defined from 0 to 63. - The UE receives an SSB resource from the base station based on the CSI-SSB-ResourceSetList (S920).
- When a CSI-RS reportConfig related to reporting for an SSBRI and L1-RSRP is configured, the UE reports a best SSBRI and an L1-RSRP corresponding thereto to the base station as a (beam) report (S930).

That is, when reportQuantity of the CSI-RS reportConfig IE is configured as 'ssb-Index-RSRP', the UE reports the best SSBRI and the L1-RSRP corresponding thereto to the base station.

Also, when a CSI-RS resource is configured in the same OFDM symbol(s) as an SSB (SS/PBCH block), and 'QCL-TypeD' is applicable, the UE may assume that the CSI-RS and the SSB are quasi co-located from the viewpoint of'QCL-TypeD'.

Here, the QCL TypeD may mean that antenna ports are QCLed from the viewpoint of spatial Rx parameters. When the UE receives a plurality of DL antenna ports having a QCL Type D relationship, the same reception beam may be applied thereto. Also, the UE does not expect that a CSI-RS is configured in a resource element (RE) overlapping an RE of an SSB.

### [Blank]

### <DL BM Using CSI-RS>

Looking at usages of the CSI-RS, i) when a repetition parameter is configured for a specific CSI-RS resource set and TRS_info is not configured, the CSI-RS is used for beam management. ii) When the repetition parameter is not configured and TRS_info is configured, the CSI-RS is used for a tracking reference signal (TRS). iii) When the repetition parameter is not configured and TRS_info is not configured, the CSI-RS is used for CSI acquisition.

Such a repetition parameter may be configured only for CSI-RS resource sets associated with a CSI-ReportConfig having a report of L1 RSRP or 'No Report(or None)'.

When the UE is configured with a CSI-ReportConfig in which reportQuantity is configured as 'cri-RSRP' or 'none', and a CSI-ResourceConfig (higher layer parameter resourcesForChannelMeasurement) for channel measurement includes an NZP-CSI-RS-ResourceSet for which a higher layer parameter 'repetition' is configured without including a higher layer parameter 'trs-Info', the UE may be configured only with ports having the same number, that is, 1-port or 2-port, having a higher layer parameter 'nrofPorts' for all CSI-RS resources in the NZP-CSI-RS-ResourceSet.

When the (higher layer parameter) repetition is configured as 'ON', this is related to an Rx beam sweeping procedure of the UE. In this case, when the UE is configured with the NZP-CSI-RS-ResourceSet, the UE may assume that at least one CSI-RS resource in the NZP-CSI-RS-ResourceSet is transmitted with the same downlink spatial domain transmission filter. That is, at least one CSI-RS resource in the NZP-CSI-RS-ResourceSet is transmitted through the same Tx beam. Here, the at least one CSI-RS resource in the NZP-CSI-RS-ResourceSet may be transmitted in different OFDM symbols. Also, the UE does not expect to receive different periodicities in periodicityAndOffset for all CSI-RS resources in the NZP-CSI-RS-Resourceset.

On the other hand, when repetition is configured as 'OFF', this is related to a Tx beam sweeping procedure of the base station. In this case, when repetition is configured as 'OFF', the UE does not assume that at least one CSI-RS resource in the NZP-CSI-RS-ResourceSet is transmitted with the same downlink spatial domain transmission filter. That is, at least one CSI-RS resource in the NZP-CSI-RS-ResourceSet is transmitted through different Tx beams.

FIG. 10 illustrates an example of a DL BM procedure using the CSI-RS. (a) of FIG. 10 illustrates an Rx beam determination (or refinement) procedure of the UE, and (b) of FIG. 10 illustrates a Tx beam sweeping procedure of the base station. Also, (a) of FIG. 10 corresponds to a case in which the repetition parameter is configured as 'ON', and (b) of FIG. 10 corresponds to a case in which the repetition parameter is configured as 'OFF'.

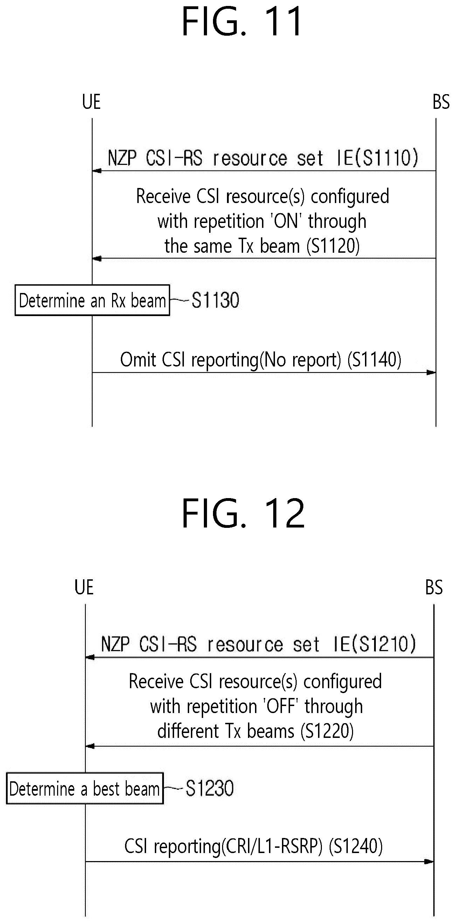

With reference to (a) of FIG. 10 and FIG. 11, an Rx beam determination process of the UE will be described.

FIG. 11 is a flowchart illustrating an example of a reception beam determination process of the UE.
- The UE receives, from the base station through RRC signaling, an NZP CSI-RS resource set IE including a higher layer parameter repetition (S1110). Here, the repetition parameter is configured as 'ON'.
- The UE repeatedly receives resource(s) in a CSI-RS resource set for which repetition is configured as 'ON' in different OFDM symbols through the same Tx beam (or DL spatial domain transmission filter) of the base station (S1120).
- The UE determines its Rx beam (S1130).
- The UE skips a CSI report (S1140). In this case, reportQuantity of the CSI report config may be configured as 'No report (or None)'.

That is, when repetition is configured as 'ON', the UE may skip the CSI report.

With reference to (b) of FIG. 10 and FIG. 12, a Tx beam determination process of the base station will be described.

FIG. 12 is a flowchart illustrating an example of a transmission beam determination process of the base station.
- The UE receives, from the base station through RRC signaling, an NZP CSI-RS resource set IE including a higher layer parameter repetition (S1210). Here, the repetition parameter is configured as 'OFF' and is related to the Tx beam sweeping procedure of the base station.
- The UE receives resources in a CSI-RS resource set for which repetition is configured as 'OFF' through different Tx beams (DL spatial domain transmission filters) of the base station (S1220).
- The UE selects (or determines) a best beam (S1240).
- The UE reports, to the base station, an ID of the selected beam and related quality information (for example, L1-RSRP) for the selected beam (S1240). In this case, reportQuantity of the CSI report config may be configured as 'CRI + L1-RSRP'.

That is, when the CSI-RS is transmitted for beam management, the UE reports the CRI and the L1-RSRP corresponding thereto to the base station.

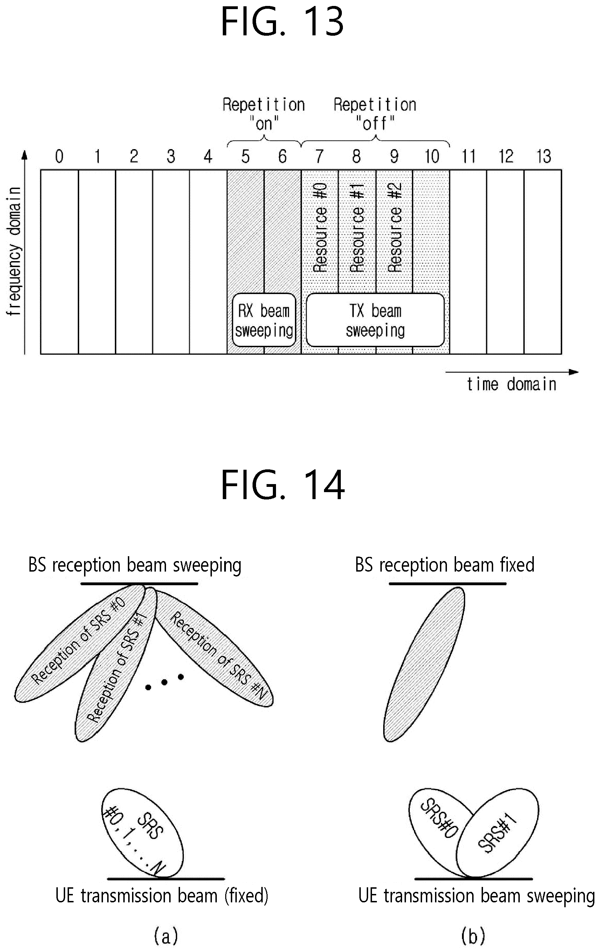

FIG. 13 illustrates an example of resource allocation in a time domain and a frequency domain related to the operation of FIG. 10.

That is, when repetition 'ON' is configured for the CSI-RS resource set, a plurality of CSI-RS resources are repeatedly used by applying the same transmission beam, and when repetition 'OFF' is configured for the CSI-RS resource set, different CSI-RS resources are transmitted through different transmission beams.

### <Beam Indication Related to DL BM>

The UE may be configured, through RRC, with a list of up to M candidate transmission configuration indication (TCI) states for at least a purpose of QCL (Quasi Co-location) indication. Here, M may be 64.

Each TCI state may be configured with one RS set. For at least a spatial QCL purpose (QCL Type D), an ID of each DL RS in the RS set may refer to one of DL RS types such as an SSB, a P-CSI RS, an SP-CSI RS, or an A-CSI RS.

Initialization/update of the ID of DL RS(s) in the RS set used for at least the spatial QCL purpose may be performed through at least explicit signaling.

[Table 2] shows an example of a TCI-State IE. The TCI-State IE associates a quasi co-location (QCL) type corresponding to one or two downlink reference signal (RS)s.

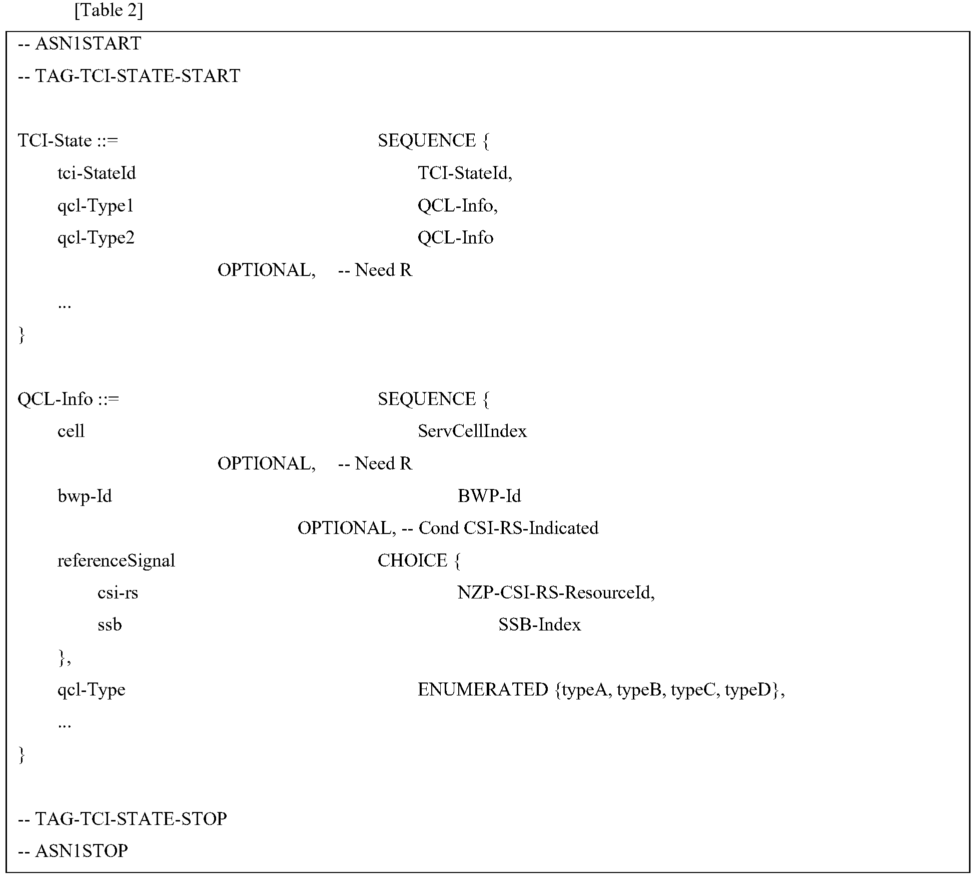

In [Table 2], a bwp-Id parameter indicates a DL BWP in which an RS is located, a cell parameter indicates a carrier in which the RS is located, and a referencesignal parameter indicates reference antenna port(s), which are a source of quasi co-location for corresponding target antenna port(s), or a reference signal including the same. The target antenna port(s) may be CSI-RS, PDCCH DMRS, or PDSCH DMRS. As one example, in order to indicate QCL reference RS information for an NZP CSI-RS, a corresponding TCI state ID may be indicated in NZP CSI-RS resource configuration information. As another example, in order to indicate QCL reference information for PDCCH DMRS antenna port(s), a TCI state ID may be indicated in each CORESET configuration. As another example, in order to indicate QCL reference information for PDSCH DMRS antenna port(s), a TCI state ID may be indicated through DCI.

### [Blank]

### <QCL (Quasi-Co Location)>

An antenna port is defined such that a channel over which a symbol on the antenna port is carried may be inferred from a channel over which another symbol on the same antenna port is carried. When a property of a channel over which a symbol on one antenna port is carried may be inferred from a channel over which a symbol on another antenna port is carried, the two antenna ports may be said to have a QC/QCL (quasi co-located or quasi co-location) relationship.

Here, the channel property includes at least one of delay spread, Doppler spread, frequency/Doppler shift, average received power, received timing/average delay, or a spatial Rx parameter. Here, the spatial Rx parameter means a spatial (reception) channel characteristic parameter such as an angle of arrival.

In order to decode a PDSCH according to a detected PDCCH having DCI intended for the UE and a given serving cell, the UE may be configured, in a higher layer parameter PDSCH-Config, with a list of up to M TCI-State configurations. M depends on a UE capability.

Each TCI-State includes parameters for configuring a quasi co-location relationship between one or two DL reference signals and a DM-RS port of a PDSCH.

The quasi co-location relationship is configured by a higher layer parameter qcl-Type1 for a first DL RS and qcl-Type2 for a second DL RS, if configured. In the case of two DL RSs, regardless of whether references are the same DL RS or different DL RSs, QCL types are not identical.

A quasi co-location type corresponding to each DL RS is given by a higher layer parameter qcl-Type of QCL-Info, and may have one of the following values:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, antenna ports of the corresponding NZP CSI-RS may be indicated/configured to be QCLed with a specific TRS from a QCL-Type A viewpoint and QCLed with a specific SSB from a QCL-Type D viewpoint. A UE having received such indication/configuration may receive the corresponding NZP CSI-RS by using Doppler and delay values measured from the QCL-TypeA TRS, and may apply a reception beam used for receiving the QCL-TypeD SSB to reception of the corresponding NZP CSI-RS.

The UE may receive an activation command by MAC CE signaling used for mapping up to 8 TCI states to codepoints of a DCI field 'Transmission Configuration Indication'.

### [Blank]

### <UL BM>

In UL BM, beam reciprocity (or beam correspondence) between a Tx beam and an Rx beam may be established or may not be established depending on UE implementation. If reciprocity between a Tx beam and an Rx beam is established at both a base station and a UE, a UL beam pair may be aligned through a DL beam pair. However, if reciprocity between a Tx beam and an Rx beam is not established at either the base station or the UE, a UL beam pair determination process is required separately from a DL beam pair determination.

Also, even when both the base station and the UE maintain beam correspondence, the base station may use a UL BM procedure for determining a DL Tx beam without a request that the UE report a preferred beam.

UL BM may be performed through beamformed UL SRS transmission, and whether UL BM is applied to an SRS resource set may be configured by a (higher layer parameter) usage. When usage is configured as 'BeamManagement(BM)', only one SRS resource may be transmitted in each of a plurality of SRS resource sets at a given time instant.

The UE may be configured, (through higher layer signaling, RRC signaling, or the like) with one or more Sounding Reference Symbol (SRS) resource sets configured by a (higher layer parameter) SRS-ResourceSet. For each SRS resource set, K≥1 SRS resources (a higher layer parameter SRS-resource) may be configured for the UE. Here, K is a natural number, and a maximum value of K is indicated by SRS capability.

Similar to DL BM, a UL BM procedure may also be divided into Tx beam sweeping of the UE and Rx beam sweeping of the base station.

FIG. 14 illustrates an example of a UL BM procedure using an SRS. FIG. 14(a) illustrates an Rx beam determination procedure of the base station, and FIG. 14(b) illustrates a Tx beam sweeping procedure of the UE.

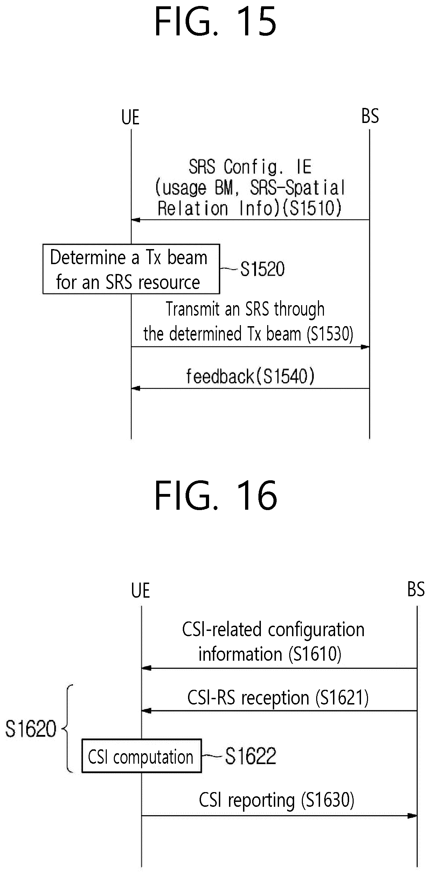

FIG. 15 is a flowchart illustrating an example of a UL BM procedure using an SRS.
- The UE receives, from the base station, RRC signaling (for example, SRS-Config IE) including a higher layer parameter usage parameter configured as 'beam management' (S1510).

[Table 3] shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

The network may trigger transmission of an SRS resource set by using a configured aperiodicSRS-ResourceTrigger (L1 DCI).

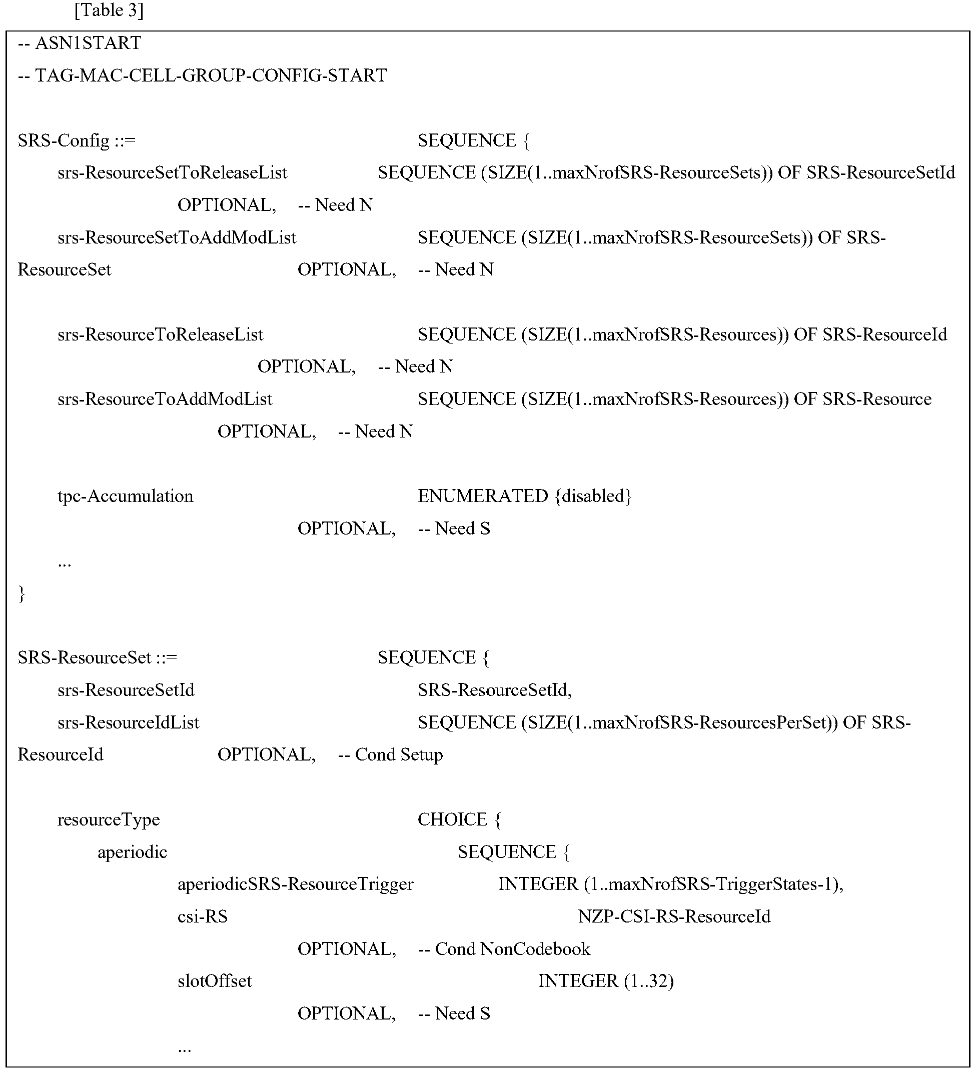

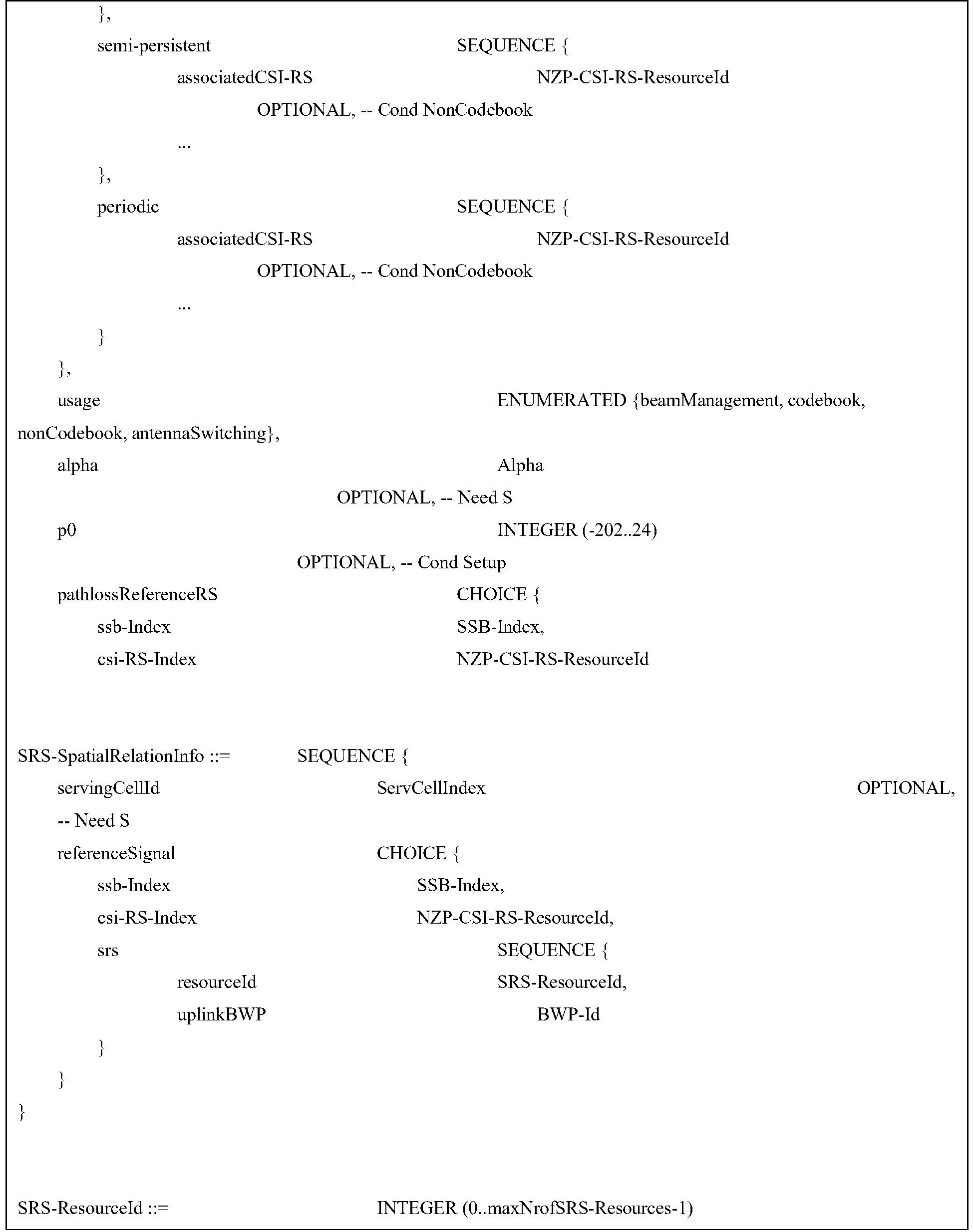

In [Table 3], usage indicates a higher layer parameter indicating whether an SRS resource set is used for beam management or for codebook-based or non-codebook-based transmission. The usage parameter corresponds to an L1 parameter 'SRS-SetUse'. 'spatialRelationInfo' is a parameter indicating configuration of a spatial relation between a reference RS and a target SRS. Here, the reference RS may be an SSB, a CSI-RS, or an SRS corresponding to an L1 parameter 'SRS-SpatialRelationInfo'. The usage is configured for each SRS resource set. - The UE determines a Tx beam for an SRS resource to be transmitted based on SRS-SpatialRelationInfo included in the SRS-Config IE (S1520). Here, SRS-SpatialRelationInfo is configured for each SRS resource, and indicates whether the same beam as a beam used for an SSB, a CSI-RS, or an SRS is to be applied for each SRS resource. Also, SRS-SpatialRelationInfo may be configured or may not be configured for each SRS resource.
- If SRS-SpatialRelationInfo is configured for an SRS resource, transmission is performed by applying the same beam as a beam used for an SSB, a CSI-RS, or an SRS. However, if SRS-SpatialRelationInfo is not configured for an SRS resource, the UE arbitrarily determines a Tx beam and transmits an SRS through the determined Tx beam (S1530).

More specifically, for a P-SRS for which 'SRS-ResourceConfigType' is configured as 'periodic':
i) when SRS-SpatialRelationInfo is configured as 'SSB/PBCH', the UE transmits the corresponding SRS resource by applying the same spatial domain transmission filter as, or a spatial domain transmission filter generated from, a spatial domain Rx filter used for reception of an SSB/PBCH; or
ii) when SRS-SpatialRelationInfo is configured as 'CSI-RS', the UE transmits the SRS resource by applying the same spatial domain transmission filter used for reception of a periodic CSI-RS or an SP CSI-RS; or
iii) when SRS-SpatialRelationInfo is configured as 'SRS', the UE transmits the corresponding SRS resource by applying the same spatial domain transmission filter used for transmission of a periodic SRS.

Even when 'SRS-ResourceConfigType' is configured as 'SP-SRS' or 'AP-SRS', beam determination and transmission operations similar to the above may be applied.
- Additionally, the UE may receive or may not receive feedback on the SRS from the base station, as in the following three cases (S1540).
   i) When Spatial_Relation_Info is configured for all SRS resources in an SRS resource set, the UE transmits the SRS with a beam indicated by the base station. For example, when Spatial_Relation_Info all indicate the same SSB, CRI, or SRI, the UE repeatedly transmits the SRS with the same beam. This case corresponds to FIG. G(a) in which the base station selects an Rx beam.
   ii) Spatial_Relation_Info may not be configured for all SRS resources in an SRS resource set. In this case, the UE may transmit while freely changing an SRS beam. That is, this case corresponds to FIG. G(b) in which the UE sweeps a Tx beam.
   iii) Spatial_Relation_Info may be configured only for some SRS resources in an SRS resource set. In this case, for configured SRS resources, the UE transmits the SRS with an indicated beam, and for SRS resources for which Spatial_Relation_Info is not configured, the UE may transmit by arbitrarily applying a Tx beam.

### [Blank]

### E-2. CSI-Related Operation

In a New Radio (NR) system, a channel state information-reference signal (CSI-RS) is used for time/frequency tracking, CSI computation, L1 (layer 1)-RSRP (reference signal received power) computation, and mobility. Here, CSI computation is related to CSI acquisition, and L1-RSRP computation is related to beam management (BM).

Channel state information (CSI) collectively refers to information capable of indicating quality of a radio channel, or also referred to as a link, formed between a UE and an antenna port.

FIG. 16 is a flowchart illustrating an example of a CSI-related procedure.
- In order to perform one of the usages of the CSI-RS described above, a UE (for example, user equipment (UE)) receives configuration information related to CSI from a base station (for example, general Node B (gNB)) through radio resource control (RRC) signaling (S2610).

The configuration information related to the CSI may include at least one of CSI-interference management (CSI-IM) resource-related information, CSI measurement configuration-related information, CSI resource configuration-related information, CSI-RS resource-related information, or CSI report configuration-related information.
i) The CSI-IM resource-related information may include CSI-IM resource information, CSI-IM resource set information, and the like. A CSI-IM resource set is identified by a CSI-IM resource set ID (identifier), and one resource set includes at least one CSI-IM resource. Each CSI-IM resource is identified by a CSI-IM resource ID.
ii) The CSI resource configuration-related information may be represented by a CSI-ResourceConfig IE. The CSI resource configuration-related information defines a group including at least one of a non-zero power (NZP) CSI-RS resource set, a CSI-IM resource set, or a CSI-SSB resource set. That is, the CSI resource configuration-related information includes a CSI-RS resource set list, and the CSI-RS resource set list may include at least one of an NZP CSI-RS resource set list, a CSI-IM resource set list, or a CSI-SSB resource set list. A CSI-RS resource set is identified by a CSI-RS resource set ID, and one resource set includes at least one CSI-RS resource. Each CSI-RS resource is identified by a CSI-RS resource ID.

As in [Table 4], parameters indicating usage of a CSI-RS, for example, a beam management-related 'repetition' parameter and a tracking-related 'trs-Info' parameter, may be configured for each NZP CSI-RS resource set. [Table 4] shows an example of an NZP CSI-RS resource set IE.

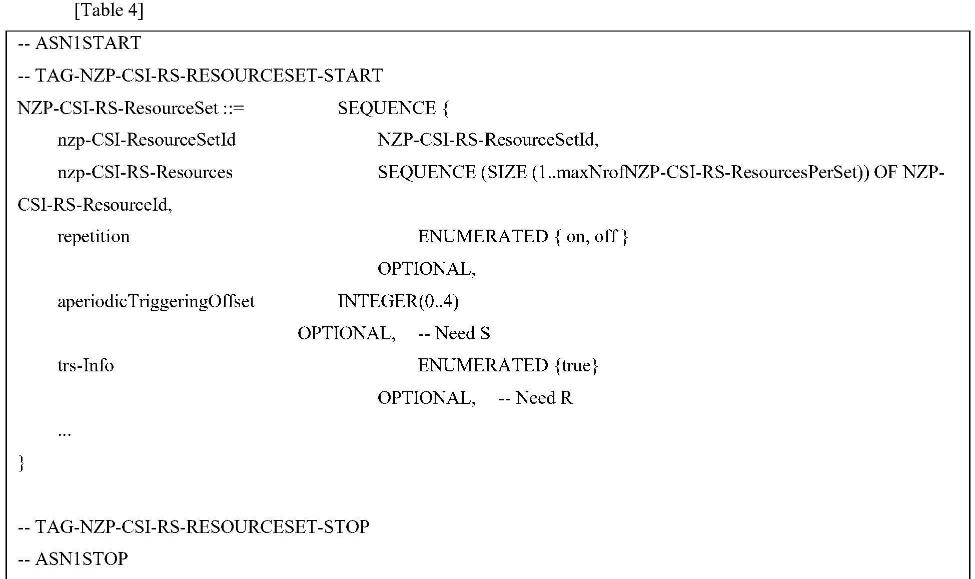

Also, a repetition parameter corresponding to a higher layer parameter corresponds to 'CSI-RS-ResourceRep' of an L1 parameter. iii) Information related to CSI report configuration may include a reportConfigType parameter indicating time domain behavior and a reportQuantity parameter indicating a CSI-related quantity to be reported. The time domain behavior may be periodic, aperiodic, or semi-persistent. Information related to CSI report configuration may be represented by a CSI-ReportConfig IE, and [Table 5] below shows an example of the CSI-ReportConfig IE. Additionally, [Table 5] below shows examples of a *CodebookConfig* IE and a *CSI-ResourceConfig* IE. The *CodebookConfig* IE is used for Type-I / Type-II codebook configuration (see TS 38.214, clause 5.2.2.2), and the *CSI-ResourceConfig* IE defines a group including at least one of {*NZP-CSI-RS-ResourceSet, CSI-IM-ResourceSet,* and/or *CSI-SSB-ResourceSet*}*.*

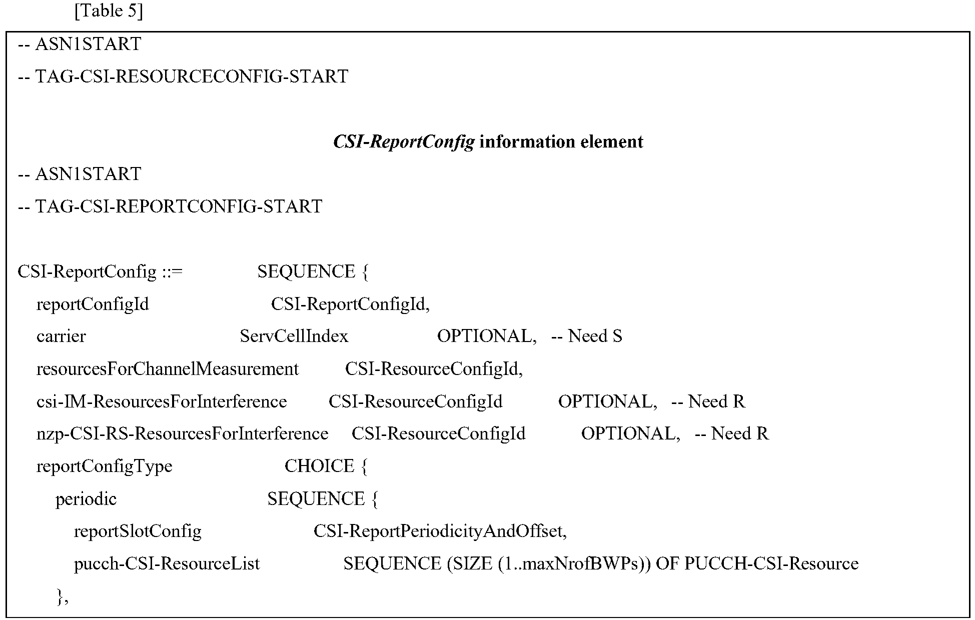

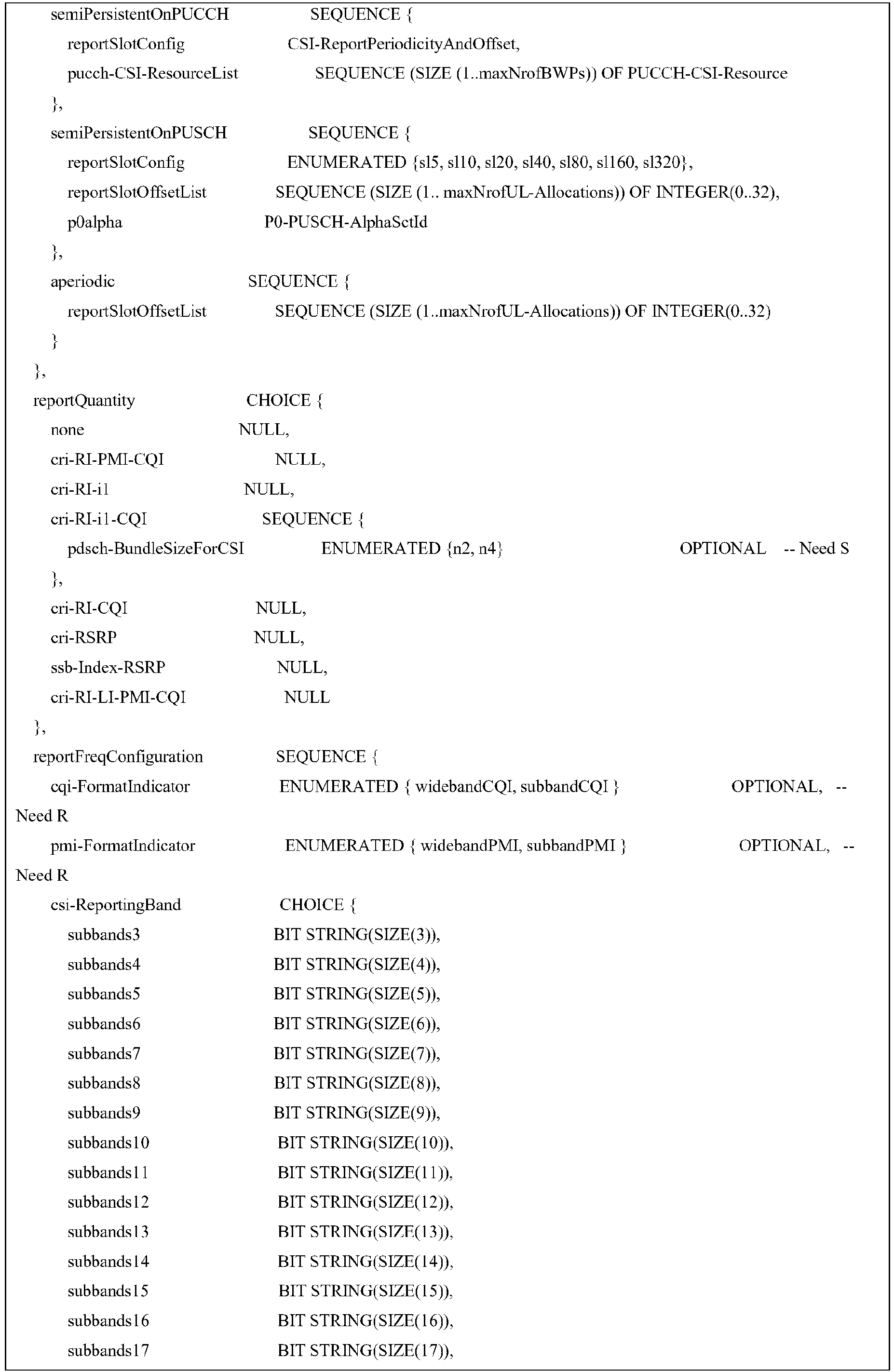

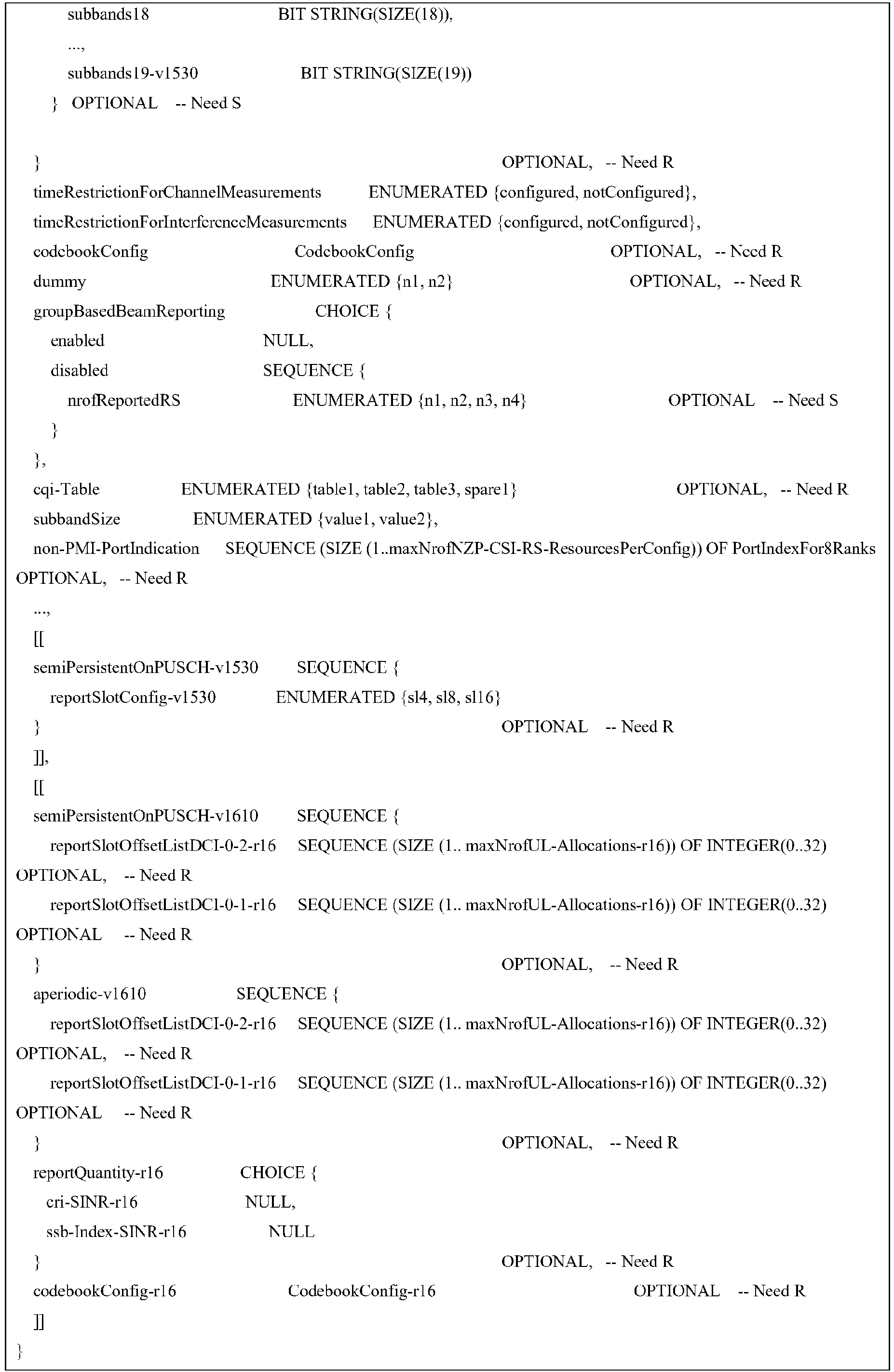

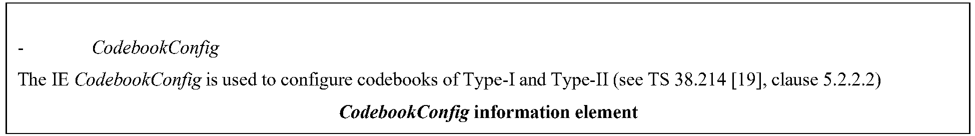

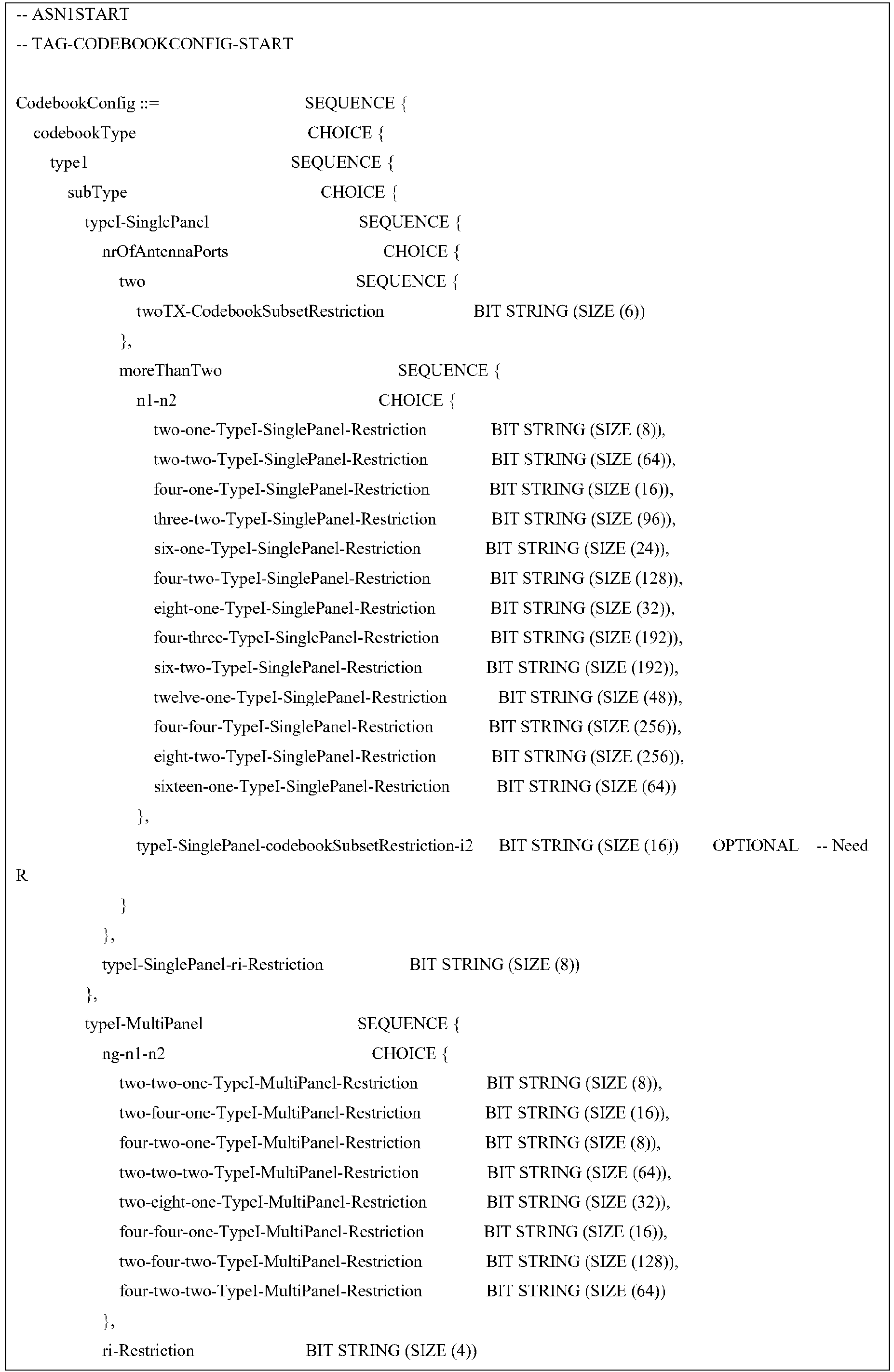

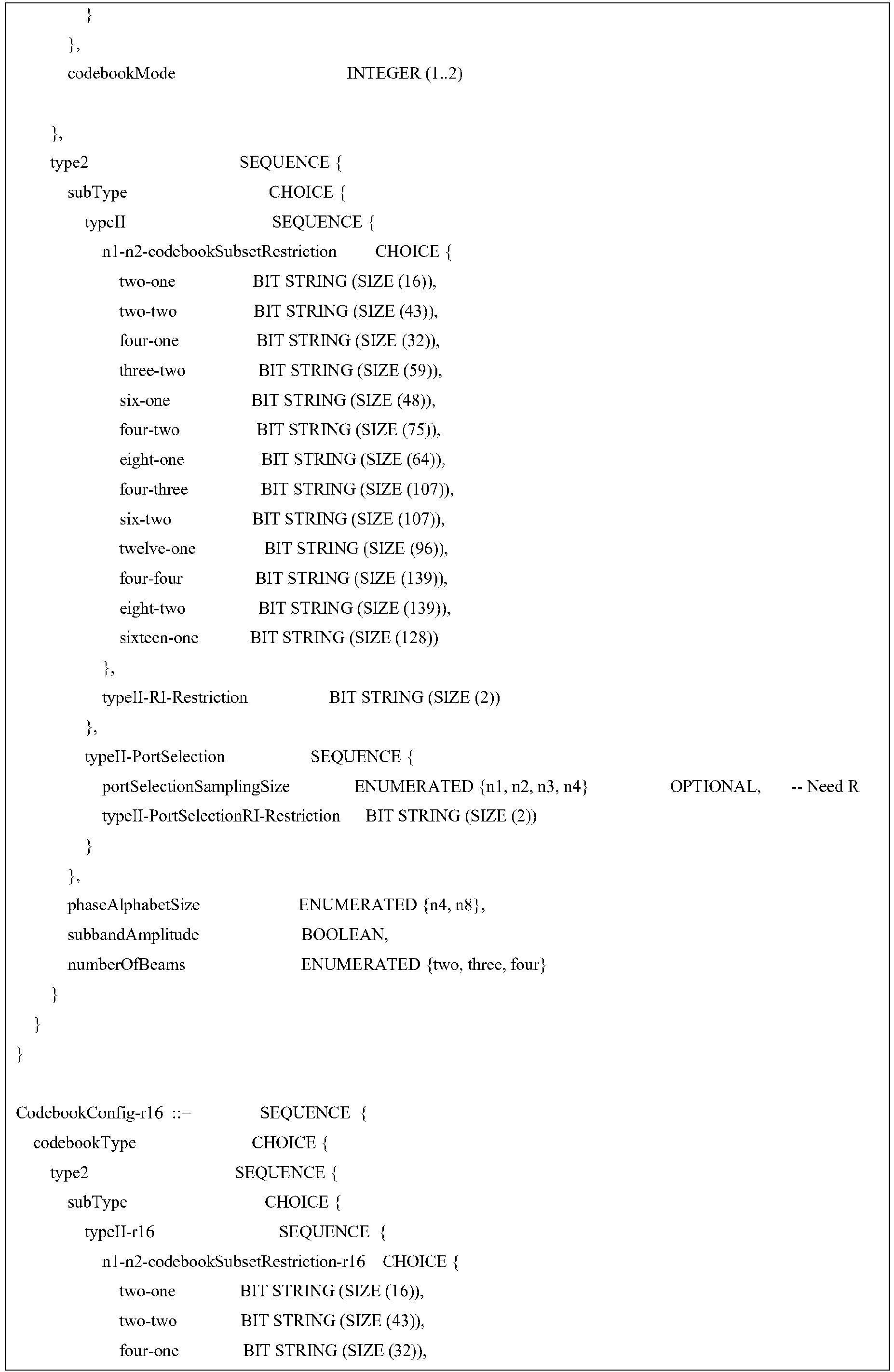

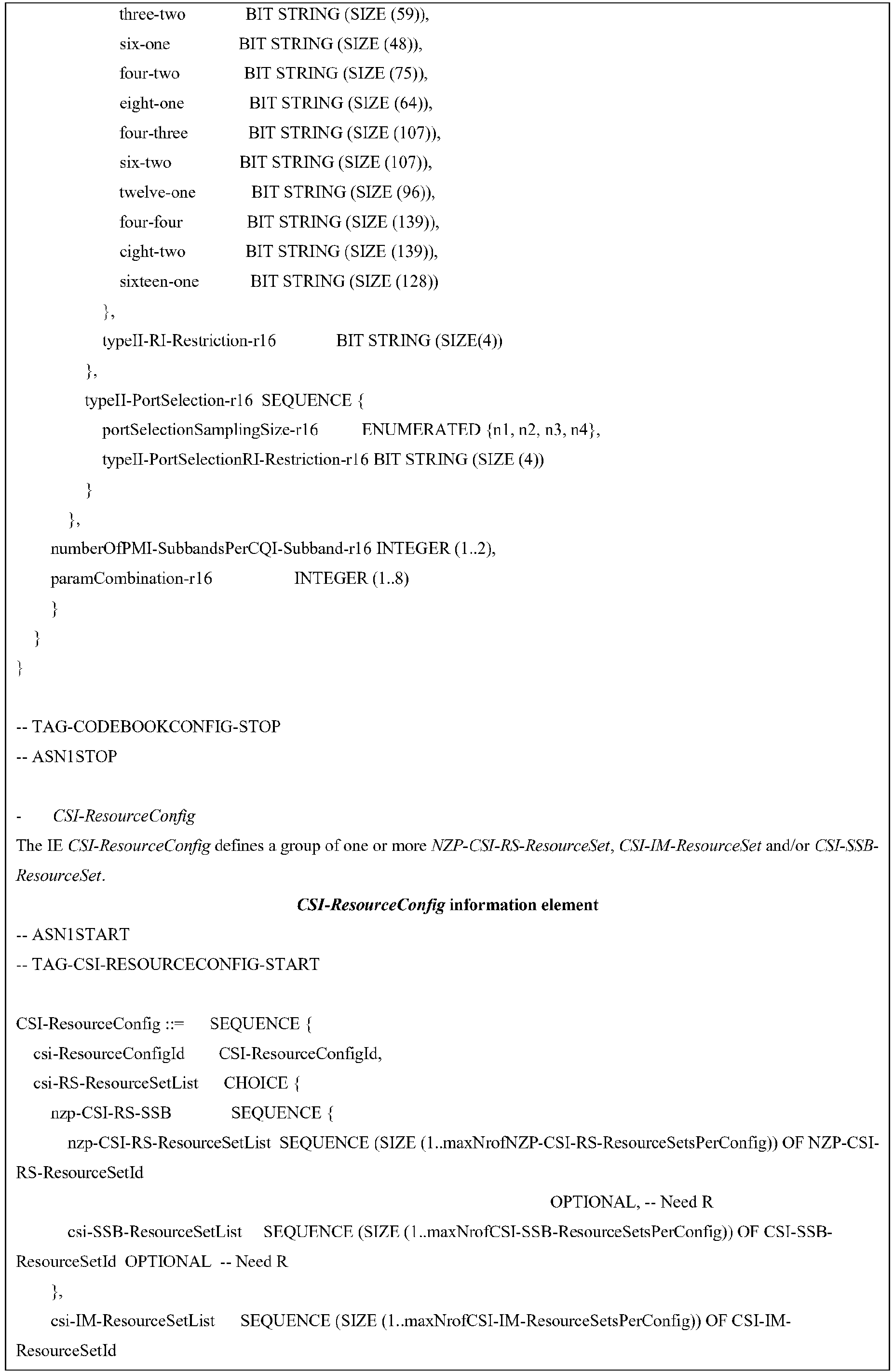

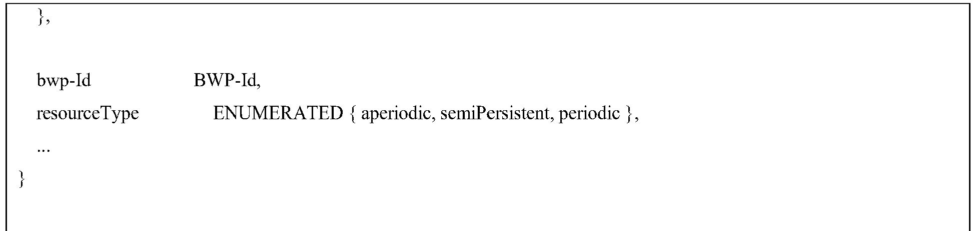

- The UE measures CSI based on the configuration information related to the CSI (S2620). The CSI measurement may include (1) a process of receiving a CSI-RS by the UE (S2621), and (2) a process of computing CSI through the received CSI-RS (S2622), and a detailed description thereof will be provided later. For the CSI-RS, RE (resource element) mapping of a CSI-RS resource in a time domain and a frequency domain is configured by a higher layer parameter CSI-RS-ResourceMapping.

[Table 6] shows an example of a CSI-RS-ResourceMapping IE.

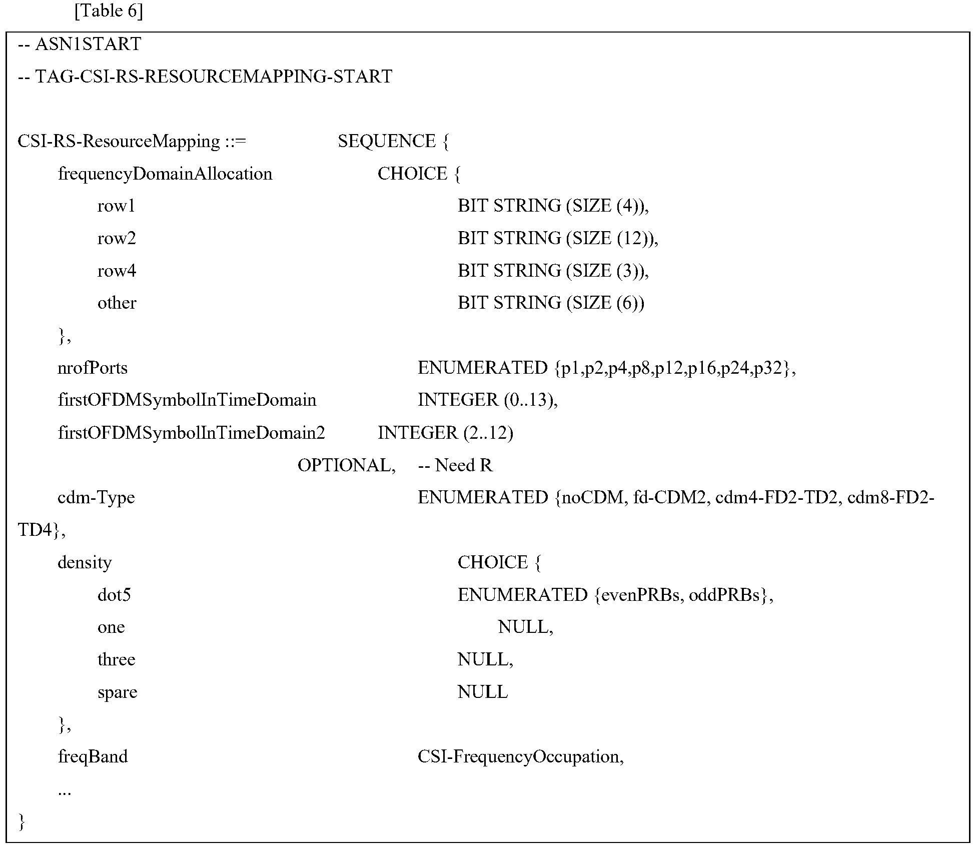

In [Table 6], density (D) indicates a density of a CSI-RS resource measured in RE/port/physical resource block (PRB), and nrofPorts indicates the number of antenna ports. - The UE reports the measured CSI to the base station (S2630). Here, when quantity of CSI-ReportConfig in Table E is configured as 'none(or No report)', the UE may skip the report.

However, even when the quantity is configured as 'none(or No report)', the UE may report to the base station.

A case in which the quantity is configured as 'none' is a case in which an aperiodic TRS is triggered or a case in which repetition is configured.

Here, only when repetition is configured as 'ON', the UE may skip the report.

### [Blank]

### CSI Measurement

An NR system supports more flexible and dynamic CSI measurement and reporting. Here, the CSI measurement may include a procedure of receiving a CSI-RS and acquiring CSI by computing the received CSI-RS.

As time domain behavior of CSI measurement and reporting, aperiodic/semi-persistent/periodic CM (channel measurement) and IM (interference measurement) are supported. A 4 port NZP CSI-RS RE pattern is used for configuration of CSI-IM.

An IMR based on CSI-IM in NR has a design similar to CSI-IM in LTE, and is configured independently from ZP CSI-RS resources for PDSCH rate matching. Also, in an IMR based on NZP CSI-RS, each port emulates an interference layer having a precoded NZP CSI-RS (and a preferred channel). This is for intra-cell interference measurement for a multi-user case, and mainly targets MU interference.

The base station transmits a precoded NZP CSI-RS to the UE on each port of the configured IMR based on NZP CSI-RS.

The UE measures interference by assuming a channel / interference layer for each port in a resource set.

For a channel, when there is no PMI and RI feedback, a plurality of resources are configured in a set, and the base station or network indicates a subset of NZP CSI-RS resources for channel / interference measurement through DCI.

Resource setting and resource setting configuration will be described in more detail.

### [Blank]

### Resource Setting

Each CSI resource setting 'CSI-ResourceConfig' includes configuration for S≥1 CSI resource sets given by a higher layer parameter csi-RS-ResourceSetList. The CSI resource setting corresponds to CSI-RS-resourcesetlist. Here, S indicates the number of configured CSI-RS resource sets. Here, the configuration for the S≥1 CSI resource sets includes each CSI resource set including CSI-RS resources (configured with NZP CSI-RS or CSI-IM), and an SS/PBCH block (SSB) resource used for L1-RSRP computation.

Each CSI resource setting is located in a DL BWP (bandwidth part) identified by a higher layer parameter bwp-id. Also, all CSI resource settings linked to a CSI reporting setting have the same DL BWP.

In a CSI resource setting included in CSI-ResourceConfig IE, time domain behavior of a CSI-RS resource is indicated by a higher layer parameter resourceType, and may be configured as aperiodic, periodic, or semi-persistent. For a periodic and semi-persistent CSI resource setting, the number (S) of configured CSI-RS resource sets is limited to '1'. For a periodic and semi-persistent CSI resource setting, a configured periodicity and slot offset are given in a numerology of an associated DL BWP, as given by bwp-id.

When the UE is configured with a plurality of CSI-ResourceConfigs including the same NZP CSI-RS resource ID, the same time domain behavior is configured for the CSI-ResourceConfig.

When the UE is configured with a plurality of CSI-ResourceConfigs including the same CSI-IM resource ID, the same time domain behavior is configured for the CSI-ResourceConfig.

The following one or more CSI resource settings for channel measurement (CM) and interference measurement (IM) are configured through higher layer signaling.
- a CSI-IM resource for interference measurement.
- an NZP CSI-RS resource for interference measurement.
- an NZP CSI-RS resource for channel measurement.

That is, a CMR (channel measurement resource) may be an NZP CSI-RS for CSI acquisition, and an IMR (Interference measurement resource) may be a CSI-IM and an NZP CSI-RS for IM.

Here, CSI-IM (or a ZP CSI-RS for IM) is mainly used for inter-cell interference measurement.

Also, an NZP CSI-RS for IM is mainly used for intra-cell interference measurement from a multi-user.

The UE may assume that CSI-RS resource(s) for channel measurement and CSI-IM / NZP CSI-RS resource(s) for interference measurement configured for one CSI reporting are 'QCL-TypeD' on a resource basis.

### [Blank]

### Resource Setting Configuration

As described above, a resource setting may mean a resource set list.

For aperiodic CSI, each trigger state configured by using a higher layer parameter CSI-AperiodicTriggerState is associated with one or more CSI-ReportConfigs in which each CSI-ReportConfig is linked to a periodic, semi-persistent, or aperiodic resource setting.

One reporting setting may be connected to up to three resource settings.
- When one resource setting is configured, a resource setting (given by a higher layer parameter resourcesForChannelMeasurement) is for channel measurement for L1-RSRP computation.
- When two resource settings are configured, a first resource setting (given by a higher layer parameter resourcesForChannelMeasurement) is for channel measurement, and a second resource setting (given by csi-IM-ResourcesForInterference or nzp-CSI-RS-ResourcesForInterference) is for interference measurement performed on CSI-IM or NZP CSI-RS.
- When three resource settings are configured, a first resource setting (given by resourcesForChannelMeasurement) is for channel measurement, a second resource setting (given by csi-IM-ResourcesForInterference) is for CSI-IM-based interference measurement, and a third resource setting (given by nzp-CSI-RS-ResourcesForInterference) is for NZP CSI-RS-based interference measurement.

For semi-persistent or periodic CSI, each CSI-ReportConfig is linked to a periodic or semi-persistent resource setting.
- When one resource setting (given by resourcesForChannelMeasurement) is configured, the resource setting is for channel measurement for L1-RSRP computation.
- When two resource settings are configured, a first resource setting (given by resourcesForChannelMeasurement) is for channel measurement, and a second resource setting (given by a higher layer parameter csi-IM-ResourcesForInterference) is used for interference measurement performed on CSI-IM.

### [Blank]

### CSI Computation

When interference measurement is performed on CSI-IM, each CSI-RS resource for channel measurement is associated with a CSI-IM resource on a resource basis according to an order of CSI-RS resources and CSI-IM resources in a corresponding resource set. The number of CSI-RS resources for channel measurement is the same as the number of CSI-IM resources.

Also, when interference measurement is performed on NZP CSI-RS, the UE does not expect to be configured with one or more NZP CSI-RS resources in an associated resource set in a resource setting for channel measurement.

A UE configured with a higher layer parameter nzp-CSI-RS-ResourcesForInterference does not expect 18 or more NZP CSI-RS ports to be configured in an NZP CSI-RS resource set.

For CSI measurement, the UE assumes the following.
- each NZP CSI-RS port configured for interference measurement corresponds to an interference transmission layer.
- all interference transmission layers of NZP CSI-RS ports for interference measurement consider an EPRE (energy per resource element) ratio.
- on RE(s) of an NZP CSI-RS resource for channel measurement, another interference signal, an NZP CSI-RS resource for interference measurement, or a CSI-IM resource for interference measurement.

### [Blank]

### CSI Reporting

For CSI reporting, time and frequency resources available to the UE are controlled by the base station.

CSI (channel state information) may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), or L1-RSRP.

For CQI, PMI, CRI, SSBRI, LI, RI, and L1-RSRP, the UE is configured by a higher layer with N≥1 CSI-ReportConfig reporting setting, M≥1 CSI-ResourceConfig resource setting, and a list of one or two trigger states (provided by aperiodicTriggerStateList and semiPersistentOnPUSCH-TriggerStateList). In the aperiodicTriggerStateList, each trigger state includes a list of associated CSI-ReportConfigs indicating resource set IDs for channel and optionally interference. In the semiPersistentOnPUSCH-TriggerStateList, each trigger state includes one associated CSI-ReportConfig.

Also, time domain behavior of CSI reporting supports periodic, semi-persistent, and aperiodic.
i) periodic CSI reporting is performed on a short PUCCH and a long PUCCH. A periodicity and a slot offset of periodic CSI reporting may be configured by RRC, and reference is made to CSI-ReportConfig IE.
ii) SP (semi-periodic) CSI reporting is performed on a short PUCCH, a long PUCCH, or a PUSCH.

For SP CSI on a short/long PUCCH, a periodicity and a slot offset are configured by RRC, and CSI reporting is activated/deactivated by a separate MAC CE.

For SP CSI on a PUSCH, a periodicity of SP CSI reporting is configured by RRC, but a slot offset is not configured by RRC, and SP CSI reporting is activated/deactivated by DCI (format 0_1). For SP CSI reporting on a PUSCH, a separate RNTI (SP-CSI C-RNTI) is used.

An initial CSI reporting timing follows a PUSCH time domain allocation value indicated in DCI, and subsequent CSI reporting timings follow a periodicity configured by RRC.

DCI format 0_1 includes a CSI request field, and may activate/deactivate a specific configured SP-CSI trigger state. SP CSI reporting has activation/deactivation that is the same as or similar to a mechanism having data transmission on an SPS PUSCH.

iii) aperiodic CSI reporting is performed on a PUSCH and is triggered by DCI. In this case, information related to triggering of aperiodic CSI reporting may be transmitted / indicated / configured through MAC-CE.

For AP CSI having an AP CSI-RS, AP CSI-RS timing is configured by RRC, and timing for AP CSI reporting is dynamically controlled by DCI.

In NR, a method in which CSI is divided and reported in a plurality of reporting instances applied to PUCCH-based CSI reporting in LTE (for example, transmission in an order of RI, WB PMI/CQI, and SB PMI/CQI) is not applied. Instead, NR restricts configuration of a specific CSI report on a short/long PUCCH, and a CSI omission rule is defined. Also, with respect to AP CSI reporting timing, a PUSCH symbol/slot location is dynamically indicated by DCI. Also, candidate slot offsets are configured by RRC. For CSI reporting, a slot offset (Y) is configured for each reporting setting. For UL-SCH, a slot offset K2 is separately configured.

Two CSI latency classes, that is, a low latency class and a high latency class, are defined from a viewpoint of CSI computation complexity. For low latency CSI, the CSI is WB CSI including up to 4 ports Type-I codebook or up to 4-ports non-PMI feedback CSI. High latency CSI means CSI other than low latency CSI. For a normal UE, (Z, Z') are defined in units of OFDM symbols. Here, Z indicates a minimum CSI processing time from reception of Aperiodic CSI triggering DCI to performing CSI reporting. Also, Z' indicates a minimum CSI processing time from reception of CSI-RS for channel/interference to performing CSI reporting.

Additionally, the UE reports the number of CSIs that may be simultaneously calculated. The following description is CSI reporting configuration defined in TS 38.214.

### 5.2.1.4 Report configuration

The UE computes CSI parameters by assuming the following dependencies among CSI parameters, when reported.
- LI is conditionally computed according to the reported CQI, PMI, RI, and CRI.
- CQI is conditionally computed according to the reported PMI, RI, and CRI.
- PMI is conditionally computed according to the reported RI and CRI.
- RI is conditionally computed according to the reported CRI.

A reporting configuration for CSI may be aperiodic (using PUSCH), periodic (using PUCCH), or semi-persistent (using PUCCH and DCI-activated PUSCH). A CSI-RS resource may be periodic, semi-persistent, or aperiodic. Table 5.2.1.4-1 shows combinations of supported CSI reporting configurations and CSI-RS resource configurations and a manner in which CSI reporting is triggered for each CSI-RS resource configuration. A periodic CSI-RS is configured in an upper layer. A semi-persistent CSI-RS is activated and deactivated as described in clause 5.2.1.5.2. An aperiodic CSI-RS is configured and triggered/activated as described in clause 5.2.1.5.1.

**Table 5.2.1.4-1: CSI reporting trigger/activation for possible CSI-RS configurations**

| **CSI-RS Configuration** | **Periodic CSI Reporting** | **Semi-Persistent CSI Reporting** | **Aperiodic CSI Reporting** |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Also, the following description is information related to activation/deactivation/trigger by MAC-CE related to Semi-Persistent/Aperiodic CSI reporting defined in TS 38.321.

### 5.18.2 Activation/Deactivation of Semi-Persistent CSI-RS/CSI-IM Resource Set

The network may activate and deactivate a configured semi-persistent CSI-RS/CSI-IM resource set of a serving cell by transmitting an SP CSI-RS/CSI-IM resource set activation/deactivation MAC CE described in clause 6.1.3.12. A configured semi-persistent CSI-RS/CSI-IM resource set is initially deactivated upon configuration and after handover.

### The MAC entity:

1> if the MAC entity receives an SP CSI-RS/CSI-IM resource set activation/deactivation MAC CE in the serving cell,
2; indicates information on the SP CSI-RS/CSI-IM resource set activation/deactivation MAC CE to a lower layer.

### 5.18.3 Aperiodic CSI Trigger State Subselection

The network may select from configured aperiodic CSI trigger states of a serving cell by transmitting an aperiodic CSI trigger state subselection MAC CE described in clause 6.1.3.13.

### The MAC entity:

1> if the MAC entity receives an aperiodic CSI trigger state subselection MAC CE in the serving cell:
2> indicates information on the aperiodic CSI trigger state subselection MAC CE to a lower layer.

### [Blank]

### Description related to a unified TCI framework

In Release-17, not only a DL TCI state but also a UL TCI state may be indicated together through DL DCI (e.g. DCI format 1-1 or 1-2), or only the UL TCI state may be indicated without indication of the DL TCI state. Accordingly, schemes used for a UL beam and power control (PC) configuration in existing R15/R16 are replaced in R17 with the above-described UL TCI state indication method. More specifically, in R17, one UL TCI state may be indicated through a TCI field of DL DCI, and the corresponding UL TCI state is applied to all PUSCHs and all PUCCHs after a predetermined time referred to as beam application time, and may be applied to some or all of indicated SRS resource sets. In R18, a method in which a plurality of UL TCI states (and/or DL TCI states) are indicated through the TCI field of DL DCI is under discussion.

### [Blank]

### Specific Embodiments of the Present Disclosure

The present disclosure relates to a technology for utilizing a synchronization signal/physical broadcast channel block (SSB) in an on-demand manner in a wireless communication system. Specifically, the present disclosure proposes a technology for performing various functions by using an on-demand SSB in a cell or frequency band in which transmission of an SSB (e.g. a synchronization signal, an MIB) and/or system information (e.g. an MIB, an SIB) is temporarily suspended for a NES operation. Specifically, the present disclosure proposes a technology related to contents and signaling of configuration information required for operating an on-demand SSB in an SSB-less cell. Hereinafter, in the present disclosure, '/' means 'and', 'or', or 'and/or' depending on context.

### [Blank]

The base station may operate technologies such as controlling on/off of a UE for a certain duration on a time axis for NES purposes, adjusting transmission and reception resources for UE-common or UE-specific signals/channels, changing an amount of frequency domain resources, adjusting transmission power, or turning on/off antenna ports (APs), transmission reception points (TRPs), etc., in a spatial domain. In the present disclosure, the listed technologies are referred to as 'NES technology' or 'NES_tech', and a state in which at least one of the NES_techs is applied is referred to as an 'NES mode' or 'NES state'. The base station may indicate to the UE which NES_tech(s) are applied for each NES_tech or NES_tech group [Approach 1], or may pre-configure NES_tech or NES_tech group(s) corresponding to each code point of a specific indicator [Approach 2]. Here, the specific indicator may be indicated through DCI or MAC CE, or may be configured through higher layer signaling.

In the case of Approach 1, when at least one NES_tech is applied to the UE, the corresponding state may be defined as an NES mode or an NES state, and furthermore, may be treated as different NES modes or different NES states depending on which NES_tech is applied. The NES mode or NES state may be used as a concept indicating whether at least one NES technology is applied, or in addition, indicating which NES technology(ies) are applied. When the NES mode or NES state further indicates which NES technology(ies) are applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the indicator, the corresponding state may be defined as an NES mode or an NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code point other than '00' is indicated through the indicator, the corresponding state may be defined as an NES mode or an NES state. Furthermore, the UE may determine NES state #1 when '01' is detected, NES state #2 when '10' is detected, and NES state #3 when '11' is detected. Accordingly, it may be distinguished, for each code point, whether the state is an NES state and/or which NES state it is.

For NES purposes, the base station may turn on/off certain spatial elements (e.g., APs, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Specifically, at least one of the following CSI frameworks may be introduced.
- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.
- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.
- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s1 is associated with the number of A1 APs (or the P1 power value or a delta value from the P1 power value), and sub-configuration index #s2 is associated with the number of A2 APs less than the number of A1 APs (or the P2 power value or a delta value from the P1 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value or a delta value from the P1 power value, thereby allowing power domain adaptation patterns to be configured differently for each sub-configuration.

By utilizing one of the options #1/2/3 described above, the UE may feedback to the base station a CSI reporting including CSI(s) corresponding to N sub-configurations, where N is between 1 and L among the L sub-configurations.

### [Blank]

According to TS 38.214, at least one sub-configuration may be configured in one CSI reporting setting, and one of the following configurations or a combination thereof may be configured in each sub-configuration.
- an ID list of one or more CSI-RS resource(s)
- antenna port subset indication configured with a bitmap
- an additional power offset delta from a PDSCH-to-CSI-RS EPRE offset configured in a CSI-RS resource setting

In the present disclosure, for convenience of description, a CSI reporting setting including a sub-configuration in which an ID list of at least one CSI-RS resource(s) is configured is referred to as type 2 spatial domain (SD) adaptation, a CSI reporting setting including a sub-configuration in which antenna port subset indication configured with a bitmap is configured is referred to as type 1 spatial domain adaptation, and a CSI reporting setting including a sub-configuration in which an additional power offset delta value is configured is referred to as power domain (PD) adaptation. For sub-configuration(s) belonging to one CSI reporting setting, an ID list of at least one CSI-RS resource(s) and/or a power offset delta value may be configured, which is referred to as type 2 spatial domain + power domain adaptation. Also, for sub-configuration(s) belonging to one CSI reporting setting, antenna port subset indication configured with a bitmap and/or a power offset delta value may be configured, which is referred to as type 1 spatial domain + power domain adaptation. In the case of type 1 spatial domain, power domain, or type 1 spatial domain + power domain adaptation, each CSI-RS resource may be linked with each of all sub-configurations configured in one CSI reporting setting. In the case of type 2 spatial domain adaptation, each CSI-RS resource may be linked only with a single sub-configuration among a plurality of sub-configurations in one CSI reporting setting. In the case of type 2 spatial domain + power domain adaptation, a list #1 of CSI-RS resource(s) configured in one sub-configuration in the same CSI reporting setting and a list #2 of CSI-RS resource(s) configured in another sub-configuration may be identical to each other or may be disjoint.

Meanwhile, when L sub-configurations are configured in one CSI reporting setting, the UE may report, to the base station, CSIs corresponding to the respective L sub-configurations through one PUSCH/PUCCH. Among the L sub-configurations, only N (greater than or equal to 1 and less than or equal to L) sub-configuration(s) may be activated or triggered through MAC-CE or DCI, and in this case, the UE may report, to the base station, CSIs corresponding to the respective N sub-configurations through one PUSCH/PUCCH. Specifically, for a CSI reporting setting in which semi-persistent CSI reporting on PUCCH (SP CSI reporting on PUCCH) is configured, N sub-configuration(s) among L sub-configurations configured through MAC-CE may be activated. Also, for a CSI reporting setting in which semi-persistent CSI reporting on PUSCH (SP CSI reporting on PUSCH) or aperiodic CSI reporting (A-CSI reporting) is configured, N sub-configuration(s) among L sub-configurations configured through DCI may be triggered.

### [Blank]

From the perspective of a base station operating a plurality of frequency bands, when the number of serving UEs is small or the traffic load is relatively low, periodically transmitting the SSB and/or system information may cause unnecessary energy consumption. In the present disclosure, the frequency band may be replaced with a band, a carrier, a serving cell, or a BWP (bandwidth part), and the like.

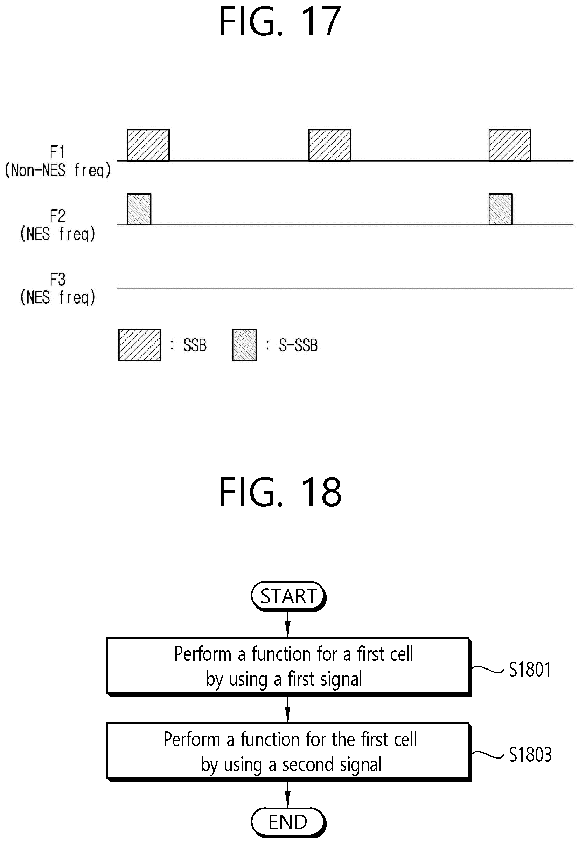

For example, three frequency bands may be operated as shown in FIG. 17. FIG. 17 illustrates an example of frequency bands operated by a base station according to an embodiment of the present disclosure. Referring to FIG. 17, when the base station operates three frequency bands, the base station may periodically transmit the SSB (e.g., legacy SSB) in some frequency bands (e.g., F1), transmit a simplified or modified S-SSB (simplified-SSB) in other frequency bands (e.g., F2), or not transmit both the SSB and the S-SSB in another frequency band (e.g., F3). That is, F2 and F3 may be understood as SSB-less frequency bands. Through this, the base station can achieve energy saving. For a UE operating in F2 or F3, the UE may request transmission of an SSB of a base station in a corresponding frequency band. An SSB transmitted according to a request of the UE may be referred to as an on-demand SSB, and the SSB may be a legacy SSB, or may be a simplified or modified S-SSB. Here, a cell in which it is allowed that an SSB is not transmitted, such as F2 or F3, may be referred to as an SSB-less cell. From a UE perspective, the SSB-less cell may be any one of a PCell/ a PSCell/ an SCell.

### [Blank]

The base station may configure, for the UE, which signal and/or channel among the following uplink signals and/or channels is to be used to request an on-demand SSB, and the UE may request the on-demand SSB through a specific uplink signal and/or channel based on configuration from the base station. For convenience of description, in the present disclosure, an uplink signal and/or channel transmitted by the UE for requesting an on-demand SSB is referred to as 'UL_SSB'.
- PRACH: for a request for an on-demand SSB, at least one RO (RACH occasion) may be separately configured. Alternatively, for a request for an on-demand SSB, some PPRACH preamble index(es) in a specific RO may be configured for the request for the on-demand SSB.
- SR (scheduling request) PUCCH / PRACH: when an SR corresponding to an SSB-less cell (e.g. an SR transmitted on a PUCCH or a PRACH) is transmitted, the UE may always be considered to request an on-demand SSB. That is, transmission of an SR corresponding to the SSB-less cell may be interpreted as a request for the on-demand SSB. Alternatively, an SR resource for requesting the on-demand SSB may be configured separately from an SR resource that does not request the on-demand SSB. Here, the SR resource may include separate time/frequency resources and/or sequence resources.
- SRS: an SRS resource for requesting an on-demand SSB may be separately configured. Here, the SRS resource may include separate time/frequency resources and/or sequence resources.
- PUCCH: on-demand SSB request information may be periodically or aperiodically transmitted through a periodic or semi-persistent PUCCH. Here, the SSB request information includes information for informing that the UE requests transmission of the on-demand SSB.
- PUSCH: on-demand SSB request information may be periodically or aperiodically transmitted through a PUSCH scheduled through a UL grant or a semi-persistent PUSCH (e.g. a CG (configured grant) PUSCH or semi-persistent CSI-reporting on a PUSCH).
- a resource for UL_SSB may be configured on an SSB-less cell. Alternatively, a resource for UL_SSB may be configured on a cell other than the corresponding SSB-less cell (e.g. a PCell / PSCell / SCell / non-serving cell, etc.).

The above-described procedure for requesting the on-demand SSB based on the uplink signal may be performed in a limited manner for a specific cell. According to one embodiment, the UE may transmit a request signal to request an on-demand SSB of a PCell.

### [Blank]

One or more UL_SSB resources may be configured for the UE. In this case, the UE may select a UL_SSB resource according to the following condition. Here, the UL_SSB resource(s) may be distinguished by time/frequency/sequence resources in the same uplink signal and/or channel, may be distinguished by a type of uplink signal and/or channel, or may be distinguished by a cell corresponding to the UL_SSB resource.
- configuring different UL_SSB resources for each SSB index or index group: here, an SSB index may be an index corresponding to an SSB to be transmitted on an SSB-less cell, or may be an index corresponding to an SSB transmitted on a reference-cell (ref-cell). In the present disclosure, the reference-cell means a cell configured to be linked for at least one of time synchronization and/or AGC (automatic gain control) setting, UL power control, path-loss estimation, measurement related to beam management (e.g. L1-RSRP, L1-SINR, etc.), and/or RRM measurement (e.g. RSRP, RSRQ, RSSI, etc.) of the SSB-less cell, and may include a cell other than the SSB-less cell (e.g. a PCell / PSCell / SCell / non-serving cell, etc.). For example, different UL_SSB resources may be configured for each SSB index or SSB index group corresponding to an SSB to be transmitted on the SSB-less cell or an SSB transmitted on the reference-cell, and UL_SSB resource #1 corresponding to SSB index group #0 or SSB index #0 may be pre-configured, and UL_SSB resource #2 corresponding to SSB index group #1 or SSB index #1 may be pre-configured. If the UE requests SSB index #1 or SSB index group #1, the UE may transmit a signal by using UL_SSB resource #2.

According to one embodiment, in preparation for a case in which it is not clear whether the UE requests a specific SSB index or index group, a UL_SSB resource for requesting all SSB indexes may be separately configured. In this case, the UE may request transmission for all SSB indexes by performing uplink transmission through the corresponding UL_SSB resource.
- configuring different UL_SSB resources according to a transmission duration, periodicity, and/or SSB pattern of an SSB that the UE intends to request: the transmission duration may mean a period from when the on-demand SSB starts on the SSB-less cell until the on-demand SSB ends. For example, when the on-demand SSB is transmitted P times with a periodicity of X msec from slot #n on the SSB-less cell and then the on-demand SSB is turned off from slot #n+k so that the SSB is no longer transmitted, k slot(s), an absolute time corresponding to the k slot(s), or a P value may be defined as the duration. An SSB periodicity may mean a transmission time interval or a minimum transmission time interval between SSBs or SSB candidates having the same index. Also, when a plurality of SSB patterns (e.g. a legacy SSB and a simplified SSB) are pre-configured/defined, different UL_SSB resources may be configured for each SSB pattern. For example, when UL_SSB resource #1 corresponding to SSB transmission duration #1 and UL_SSB resource #2 corresponding to SSB transmission duration #2 are separately configured, the UE may select UL_SSB resource #2 according to a required SSB transmission duration, and may perform uplink transmission by using the selected UL_SSB resource #2. Accordingly, the UE may assume that the on-demand SSB may be transmitted during SSB transmission duration #2.
- when there is one or more reference-cell(s) corresponding to the SSB-less cell, configuring different or identical UL_SSB resources for each reference-cell: when a plurality of reference-cells corresponding to a specific SSB-less cell are configured, different UL_SSB resources may be configured for each reference-cell. For example, when a PCell and another SCell are configured as reference-cells for the SSB-less cell, UL_SSB resource #1 corresponding to the PCell and UL_SSB resource #2 corresponding to the other SCell may be configured, and when the UE intends to request, on the SSB-less cell, an SSB linked with the PCell, the UE may perform uplink transmission through UL_SSB resource #1.
- when UL_SSB resources corresponding to one or more SSB-less cell(s) are configured for a common cell, configuring different UL_SSB resources for each SSB-less cell or group of SSB-less cells: for example, when the UE uses three serving cells through CA (carrier aggregation), both SCell #0 and SCell #1 operate as SSB-less cells, and a UL_SSB resource for requesting an SSB on SCell #0 and a UL_SSB resource for requesting an SSB on SCell #1 may both be configured on the PCell.

In this case, Opt-1) the UL_SSB resource for requesting the SSB on SCell #0 and the UL_SSB resource for requesting the SSB on SCell #1 may be identically configured, or Opt-2) the UL_SSB resource for requesting the SSB on SCell #0 and the UL_SSB resource for requesting the SSB on SCell #1 may be differently configured. In the case of Opt-1, the UE may request transmission of the on-demand SSB for both SCells by performing uplink transmission through a common UL_SSB resource. In the case of Opt-2, the UE may request transmission of the on-demand SSB for a specific SCell by performing uplink transmission on one of different UL_SSB resources.
- configuring different UL_SSB resources according to whether an SSB requested by the UE is an NCD-SSB (non-cell defining-SSB) or a CD-SSB (cell defining-SSB): the NCD-SSB means an SSB that does not provide CORESET index 0 and type0-PDCCH CSS set information through PBCH information, and the CD-SSB means an SSB that provides CORESET index 0 and type0-PDCCH CSS set information through PBCH information. According to one embodiment, UL_SSB resource #1 corresponding to the NCD-SSB and UL_SSB resource #2 corresponding to the CD-SSB may be separately configured, and when the UE performs uplink transmission through UL_SSB resource #1, the UE may expect that the NCD-SSB may be transmitted in the corresponding SSB-less cell. On the other hand, when the UE performs uplink transmission through UL_SSB resource #2, the UE may expect that the CD-SSB may be transmitted in the corresponding SSB-less cell.

### [Blank]

In general, the SSB may serve as a reference signal by which the UE acquires time synchronization, path-loss estimation for uplink transmit power control, and a reference signal for QCL/TCI/spatial relation information. However, since the SSB is not transmitted in the SSB-less cell, it is necessary to configure an alternative signal and/or channel performing the above-described role. When an SSB is transmitted on the corresponding SSB-less cell in a form of the on-demand SSB, the present disclosure proposes a method for providing the above-described role of the SSB through the on-demand SSB.

### [Blank]

FIG. 18 illustrates an example of a procedure for utilizing an on-demand SSB in a wireless communication system according to one embodiment of the present disclosure. FIG. 18 illustrates a method performed by the UE.

Referring to FIG. 18, in step S2801, the UE performs a function for a first cell by using a first signal. Here, the first signal may include a signal transmitted in the first cell, or may include a signal transmitted in a cell different from the first cell. For example, the different cell may include one of an SSB-less cell or a normal cell configured as a reference cell for the first cell.

In step S1803, the UE performs a function for the first cell by using a second signal. Here, the second signal includes an on-demand SSB, and the on-demand SSB includes a conditional SSB transmitted in the first cell, which is a target of the function performed in step S1801. When the on-demand SSB is transmitted due to a request of the UE or occurrence of another event, the UE may perform, by using the on-demand SSB, the function previously performed by using the first signal. Thereafter, although not shown in FIG. 18, in response to satisfaction of a given condition, the corresponding function may be performed again by using the first signal.

As in the embodiment described with reference to FIG. 18, the second signal including the on-demand SSB may replace the first signal or may be used together with the first signal for the function performed by using the first signal. In this case, according to one embodiment, the first signal may be understood as a signal transmitted on a cell other than the first cell (e.g. a reference-cell). Alternatively, according to another embodiment, the first signal and the second signal may be understood as homogeneous or heterogeneous signals transmitted in the same cell, and in this case, the first signal and the second signal may be transmitted with different periodicities.

As in the embodiment described with reference to FIG. 18, a specific function may be performed by using the on-demand SSB. For example, the specific function may include at least one of time synchronization acquisition, path-loss estimation, configuration of a parameter indicating channel relevance, and CSI measurement and/or reporting. In this case, since it is not always guaranteed that the on-demand SSB is transmitted, control and/or management for performing the corresponding function by using the on-demand SSB is necessary. Hereinafter, the present disclosure describes specific embodiments for each function.

### [Blank]

### [Embodiment #1] Method for performing a timing reference function by using an on-demand SSB transmitted on an SSB-less cell

One or more reference-cell(s) may be configured or indicated for the UE as a timing reference for the SSB-less cell, and the UE may obtain time synchronization information from the configured one or more reference-cell(s). However, according to various embodiments, the on-demand SSB transmitted in the SSB-less cell may be used as a signal for the timing reference.

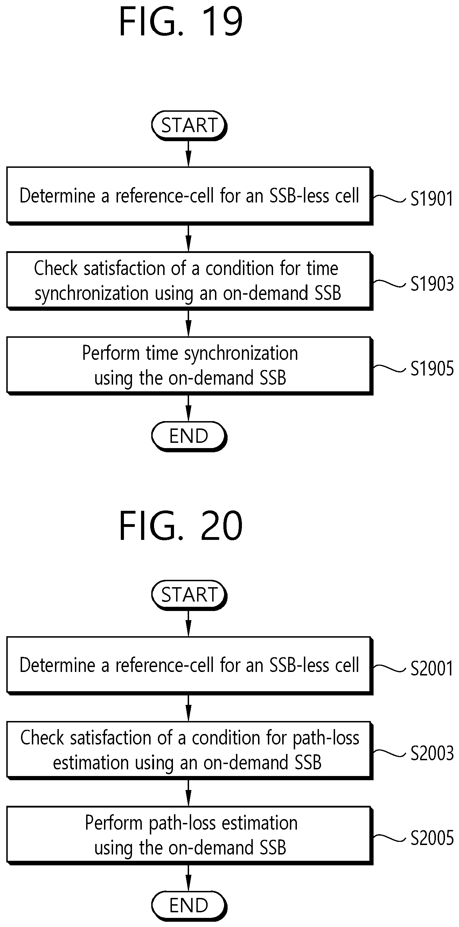

FIG. 19 illustrates an example of a procedure for performing time synchronization of the SSB-less cell in a wireless communication system according to one embodiment of the present disclosure. FIG. 19 illustrates a method performed by the UE.

Referring to FIG. 19, in step S1901, the UE determines at least one reference-cell for the SSB-less cell. For example, the UE may determine the at least one reference-cell by receiving configuration information related to the reference-cell from the base station. As another example, the UE may determine the at least one reference-cell based on a pre-defined rule. Here, the reference-cell provides a downlink signal or channel for obtaining time synchronization applied to the SSB-less cell.

In step S1903, the UE checks satisfaction of a condition for time synchronization using the on-demand SSB. For example, the condition may be related to at least one of a configuration of the base station, an SSB transmission operation in the SSB-less cell, or an SSB reception operation in the SSB-less cell, as a change in a situation related to the on-demand SSB. Specifically, the condition may include at least one of that the on-demand SSB is transmitted, that transmission of the on-demand SSB is maintained for at least a threshold time, that transmission of the on-demand SSB is performed at least a threshold number of times, and that a time synchronization function for the on-demand SSB is configured and/or activated.

In step S1905, the UE performs time synchronization using the on-demand SSB. That is, based on satisfaction of the condition for time synchronization using the on-demand SSB, the UE may perform time synchronization of the SSB-less cell in which the on-demand SSB is transmitted by using the on-demand SSB. In this case, a time period in which the time synchronization operation using the on-demand SSB is valid may be limited. That is, the UE may obtain time synchronization by using the on-demand SSB during a configured or determined time period, and when the time period elapses, may perform time synchronization by using a signal on the reference-cell previously used for time synchronization or another reference-cell.

As described with reference to FIG. 19, the on-demand SSB transmitted in the SSB-less cell may be used as a signal for the timing reference. Hereinafter, the present disclosure describes various embodiments for an operation using the SSB-less cell as a cell serving as the timing reference.

(Embodiment #1-1-1) When the UE transmits an uplink signal and/or channel for requesting the on-demand SSB in the SSB-less cell or receives signaling informing that the on-demand SSB is being transmitted from the base station, the UE may receive the on-demand SSB from the corresponding SSB-less cell. In this case, while receiving the on-demand SSB from the SSB-less cell, the UE may temporarily consider the SSB-less cell, not the reference-cell, as a cell serving as the timing reference.

(Embodiment #1-1-1) When the UE transmits an uplink signal and/or channel for requesting the on-demand SSB in the SSB-less cell or receives signaling informing that the on-demand SSB is being transmitted from the base station, the UE may receive the on-demand SSB from the corresponding SSB-less cell. In this case, while receiving the on-demand SSB from the SSB-less cell, the UE may temporarily consider the SSB-less cell, not the reference-cell, as a cell serving as the timing reference.

(Embodiment #1-1-2) When the UE receives the on-demand SSB received from the corresponding SSB-less cell for longer than a time period of length T or receives the SSB in T or more time occasions, the UE may temporarily consider the SSB-less cell, not the reference-cell, as a cell serving as the timing reference. Here, the value of T may be pre-defined or may be configured or indicated by the base station.

(Embodiment #1-2) It may be configurable whether, while the UE receives the on-demand SSB from the corresponding SSB-less cell temporarily or after receiving the on-demand SSB, the UE may consider the SSB-less cell, not the reference-cell, as a cell serving as the timing reference. For example, when configured or indicated by the base station that the SSB-less cell, not the reference-cell, may be considered as a cell serving as the timing reference, the UE may consider the SSB-less cell, not the reference-cell, as a cell serving as the timing reference while temporarily receiving the on-demand SSB from the corresponding SSB-less cell or after receiving the on-demand SSB. Conversely, when configured or indicated by the base station that the SSB-less cell, not the reference-cell, may not be considered as a cell serving as the timing reference, the UE may consider the reference-cell as the cell serving as the timing reference regardless of reception of the on-demand SSB from the corresponding SSB-less cell.

(Embodiment #1-3) Until RACH corresponding to the SSB-less cell is triggered, the reference-cell is maintained as a timing reference, and thereafter, when the RACH corresponding to the SSB-less cell is transmitted and the corresponding random access procedure is completed, the reference-cell corresponding to the timing reference may be updated. In this case, information related to the updated reference-cell may be explicitly configured or indicated by the base station, or the reference-cell may be determined by a rule. For example, the rule may be defined to determine, as the reference cell, the SSB-less cell itself, a PCell, a PSCell, a serving cell with lowest index, or a serving cell with highest index.

(Embodiment #1-4) In the present disclosure, the reference-cell and the SSB-less cell may mean the same cell. For example, there may exist SSB #1 transmitted with a periodicity of P1 ms in a certain cell (e.g. a cell configured as a reference-cell), and SSB #2 transmitted with a periodicity of P2 ms in the corresponding cell may be indicated through DCI / MAC-CE / RRC signaling, etc. Here, P2 may have a value smaller than P1. That is, in this case, the SSB of the reference-cell may be referred to as SSB #1, and the SSB of the SSB-less cell may be referred to as SSB #2.

Specifically, while performing time synchronization through SSB #1, the UE checks satisfaction of a condition for time synchronization using SSB #2. For example, the condition may include at least one of that SSB #2 is transmitted, that transmission of SSB #2 is maintained for at least a threshold time, that transmission of SSB #2 is performed at least a threshold number of times, and that a time synchronization function for SSB #2 is configured and/or activated. Based on satisfaction of the condition for time synchronization using SSB #2, the UE may perform time synchronization for the corresponding cell by using SSB #2 or by using SSB and SSB #1. In this case, a time period in which the time synchronization operation using SSB #2 is valid may be limited. That is, the UE may obtain time synchronization by using SSB #2 during a configured or determined time period, and when the time period elapses, may perform time synchronization by using SSB #1 previously used for time synchronization.

### [Blank]

### [Embodiment #2] Method for performing path-loss estimation by using an on-demand SSB transmitted on an SSB-less cell

When transmitting an uplink signal and/or channel, the UE may perform path-loss estimation based on a specific downlink RS and may determine a transmit power value of the uplink signal and/or channel based on the estimated path-loss value. For example, the transmit power value may be determined according to clause 7 of TS 38.213 of the 3GPP NR standard. In this case, the uplink signal and/or channel may be one of a PUSCH, a PUCCH, an SRS, and a PRACH. Also, the downlink RS for path-loss estimation may be one of an SSB and a CSI-RS. Also, the downlink RS for path-loss estimation corresponding to each uplink signal and/or channel may be configured or indicated through RRC signaling, MAC-CE, and/or DCI, or may be determined by a pre-determined rule (e.g. an SSB used in an MIB acquisition procedure, an SSB linked with a transmitted PRACH, a downlink RS linked with a specific CORESET, etc.). Also, in performing path-loss estimation, since an estimated value is derived based on a difference between a power value of the downlink RS and reception sensitivity (e.g. RSRP) of the corresponding downlink RS, the UE needs to know a transmit power value of the corresponding downlink RS at the base station.

One or more reference-cell(s) or downlink RS(s) on SSB-less cell(s) for path-loss estimation corresponding to an uplink signal and/or channel to be transmitted in the SSB-less cell may be configured or indicated for the UE, and the UE may determine a power value for the uplink signal and/or channel based on path-loss estimation using the corresponding downlink RS.

If the downlink RS(s) for path-loss estimation corresponding to the uplink signal and/or channel to be transmitted in the SSB-less cell are not configured or indicated, an SSB may be used as the downlink RS for path-loss estimation according to a pre-determined rule. Here, the SSB may be an SSB on a reference-cell, not an SSB on the SSB-less cell, and the corresponding reference-cell may be pre-defined (e.g. a PCell, a PSCell, another SCell belonging to an sTAG (secondary TAG), a serving cell having the lowest cell index, a serving cell having the highest cell index, or a reference-cell configured as a timing reference), or may be configured or indicated by the base station.

FIG. 20 illustrates an example of a procedure for performing time synchronization of the SSB-less cell in a wireless communication system according to one embodiment of the present disclosure. FIG. 20 illustrates a method performed by the UE.

Referring to FIG. 20, in step S2001, the UE determines at least one reference-cell for the SSB-less cell. For example, the UE may determine the at least one reference-cell by receiving configuration information related to the reference-cell from the base station. As another example, the UE may determine the at least one reference-cell based on a pre-defined rule. Here, the reference-cell provides downlink RS(s) for estimating path-loss applied to the SSB-less cell.

In step S2003, the UE checks satisfaction of a condition for path-loss estimation using the on-demand SSB. For example, the condition may be related to at least one of a configuration of the base station, an SSB transmission operation in the SSB-less cell, or an SSB reception operation in the SSB-less cell, as a change in a situation related to the on-demand SSB. Specifically, the condition may include at least one of that the on-demand SSB is transmitted, that transmission of the on-demand SSB is maintained for at least a threshold time, that transmission of the on-demand SSB is performed at least a threshold number of times, that a path-loss estimation function for the on-demand SSB is configured and/or activated, and that an SSB is configured as an RS for path-loss estimation in the reference-cell.

In step S2005, the UE performs path-loss estimation using the on-demand SSB. That is, based on satisfaction of the condition for path-loss estimation using the on-demand SSB, the UE may perform path-loss estimation applied to determine uplink transmit power in the SSB-less cell in which the on-demand SSB is transmitted by using the on-demand SSB. In this case, a time period in which the path-loss estimation operation using the on-demand SSB is valid may be limited. That is, the UE may estimate path-loss by using the on-demand SSB during a configured or determined time period, and when the time period elapses, may estimate path-loss by using a signal on the reference-cell previously used for path-loss estimation or another reference-cell.

As described with reference to FIG. 20, the on-demand SSB transmitted in the SSB-less cell may be used as a signal for estimating path-loss. Hereinafter, the present disclosure describes various embodiments for an operation using the on-demand SSB on the SSB-less cell for path-loss estimation.

(Embodiment #2-1-1) When the UE transmits an uplink signal and/or channel for requesting the on-demand SSB in the SSB-less cell or receives signaling informing that the on-demand SSB is being transmitted from the base station, the UE may receive the on-demand SSB from the corresponding SSB-less cell. While receiving the on-demand SSB from the corresponding SSB-less cell, the UE may temporarily perform path-loss estimation by using the on-demand SSB on the SSB-less cell, not a downlink RS on the reference-cell. In this case, the corresponding rule may be applied only when the configured or indicated/determined downlink RS on the reference-cell is an SSB. In other words, when the configured or indicated/determined downlink RS on the reference-cell is an SSB, path-loss estimation using the on-demand SSB on the SSB-less cell may be performed in a limited manner.

(Embodiment #2-1-2) When the UE receives the on-demand SSB received from the corresponding SSB-less cell for longer than a time period of length T or receives the SSB in T or more time occasions, the UE may temporarily perform path-loss estimation by using the on-demand SSB on the SSB-less cell, not the downlink RS on the reference-cell. Here, the value of T may be pre-defined or may be configured or indicated by the base station.

(Embodiment #2-2) It may be configurable whether, while the UE receives the on-demand SSB from the corresponding SSB-less cell temporarily or after receiving the on-demand SSB, the UE may perform path-loss estimation by using the on-demand SSB on the SSB-less cell, not the downlink RS on the reference-cell. Alternatively, whether the UE may perform path-loss estimation by using the on-demand SSB on the SSB-less cell, not the downlink RS on the reference-cell, may be explicitly indicated through MAC-CE / DCI, etc. In this case, the corresponding rule may be applied only when the configured, indicated, or determined downlink RS on the reference-cell is an SSB. In other words, when the configured or indicated/determined downlink RS on the reference-cell is an SSB, whether path-loss estimation using the on-demand SSB on the SSB-less cell is performed may be configured/indicated in a limited manner. For example, when configured or indicated by the base station that path-loss estimation may be performed by using the on-demand SSB on the SSB-less cell, not the downlink RS on the reference-cell, the UE may perform path-loss estimation by using the on-demand SSB on the SSB-less cell, not the downlink RS on the reference-cell, while temporarily receiving the on-demand SSB from the corresponding SSB-less cell or after receiving the on-demand SSB. Conversely, when configured or indicated by the base station that path-loss estimation may not be performed by using the on-demand SSB on the SSB-less cell, not the downlink RS on the reference-cell, the UE may perform path-loss estimation by using the downlink RS on the reference-cell regardless of reception of the on-demand SSB from the corresponding SSB-less cell.

(Embodiment #2-3) Until RACH corresponding to the SSB-less cell is triggered, performing path-loss estimation using the downlink RS on the reference-cell is maintained, and thereafter, when the RACH corresponding to the SSB-less cell is transmitted and the corresponding random access procedure is completed, the reference-cell for performing path-loss estimation and the downlink RS on the reference-cell may be updated. In this case, information on the updated reference-cell and the downlink RS on the reference-cell may be explicitly configured or indicated by the base station. Alternatively, the reference-cell and the downlink RS on the reference-cell may be determined by a rule.

(Embodiment #2-4) In the present disclosure, the reference-cell and the SSB-less cell may mean the same cell. For example, there may exist SSB #1 transmitted with a periodicity of P1 ms in a certain cell (e.g. a cell configured as a reference-cell), and SSB #2 transmitted with a periodicity of P2 ms in the corresponding cell may be indicated through DCI / MAC-CE / RRC signaling, etc. Here, P2 may have a value smaller than P1. That is, in this case, the SSB of the reference-cell may be referred to as SSB #1, and the SSB of the SSB-less cell may be referred to as SSB #2.

Specifically, while performing path-loss estimation through SSB #1, the UE checks satisfaction of a condition for path-loss estimation using SSB #2. For example, the condition may include at least one of that SSB #2 is transmitted, that transmission of SSB #2 is maintained for at least a threshold time, that transmission of SSB #2 is performed at least a threshold number of times, and that a path-loss estimation function for SSB #2 is configured and/or activated. Based on satisfaction of the condition for path-loss estimation using SSB #2, the UE may perform path-loss estimation for the corresponding cell by using SSB #2 or by using SSB #2 and SSB #1. In this case, a time period in which the path-loss estimation operation using SSB #2 is valid may be limited. That is, the UE may perform path-loss estimation by using SSB #2 during a configured or determined time period, and when the time period elapses, may perform path-loss estimation by using SSB #1 previously used for path-loss estimation.

### [Blank]

### [Embodiment #3] Method for configuring an RS (reference signal) for QCL / TCI / spatial relation information for an on-demand SSB transmitted on an SSB-less cell

In configuring a parameter (e.g. a TCI state, a TCI uplink state, and/or spatial relation information) indicating channel relevance for a downlink signal, uplink signal, and/or channel received or transmitted on an SSB-less cell, a downlink signal or uplink signal used as a QCL source or RS (reference signal) is required. In this case, at least one of the following signals may be configured as the QCL source.
- an SSB on the SSB-less cell
- a downlink or uplink signal other than the SSB on the SSB-less cell (e.g. another signal on the SSB-less cell)
- a downlink or uplink signal on a cell other than the SSB-less cell

Since the SSB on the SSB-less cell may not be transmitted during a specific time period, when only the SSB on the SSB-less cell is used as the QCL source, a gap of the QCL source may occur. Accordingly, the present disclosure proposes the following embodiments for controlling the QCL source.

### [Blank]

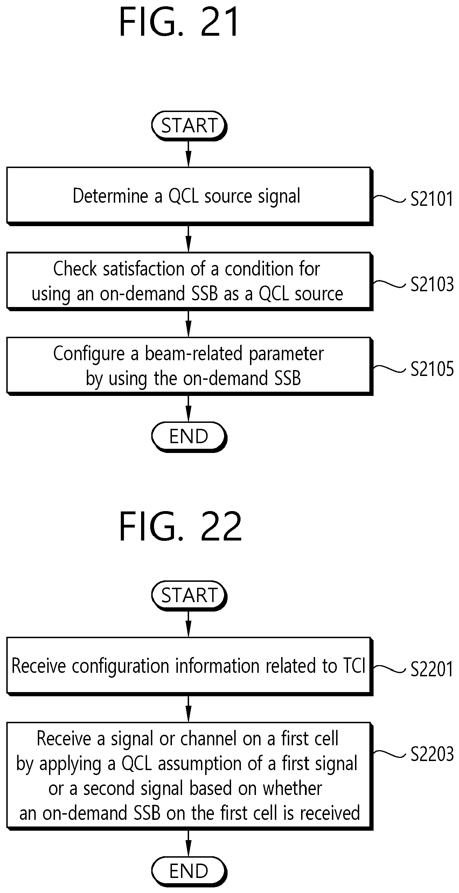

FIG. 21 illustrates an example of a procedure for configuring a parameter indicating channel relevance of the SSB-less cell in a wireless communication system according to one embodiment of the present disclosure. FIG. 21 illustrates a method performed by the UE. In the following description, the QCL source may be referred to as a reference signal.

Referring to FIG. 21, in step S2101, the UE uses a signal other than the on-demand SSB as a QCL source. The QCL source may be referred to as a signal having a QCL relationship in configuring a parameter indicating channel relevance (hereinafter, 'channel relevance parameter'), for example, a TCI state, an uplink TCL state, or spatial relation information. Accordingly, in transmitting or receiving a signal linked with the channel relevance parameter, the UE may perform transmission or reception based on a channel of a signal used as the QCL source (e.g. spatial domain filter configuration, etc.). In this case, the QCL source may be indicated separately from configuration of the channel relevance parameter or may be indicated as part of configuration information of the channel relevance parameter. In this case, a signal other than the on-demand SSB may be referred to as the QCL source. That is, a signal other than the on-demand SSB may be indicated as the QCL source from the base station.

In step S2103, the UE checks satisfaction of a condition for using the on-demand SSB as the QCL source. For example, the condition may be related to at least one of a configuration of the base station, an SSB transmission operation in the SSB-less cell, or an SSB reception operation in the SSB-less cell, as a change in a situation related to the on-demand SSB in the SSB-less cell. Specifically, the condition may include at least one of that the on-demand SSB is transmitted, that transmission of the on-demand SSB is maintained for at least a threshold time, that transmission of the on-demand SSB is performed at least a threshold number of times, and that a configuration function of the channel relevance parameter using the on-demand SSB is configured and/or activated.

In step S2105, the UE uses the on-demand SSB as the QCL source. That is, the UE refers to the on-demand SSB as a signal having a QCL relationship indicated by the channel relevance parameter. For this, the UE may perform measurement on the on-demand SSB(s). Accordingly, in transmitting or receiving a signal linked with the channel relevance parameter, the UE may perform transmission or reception based on a channel of the on-demand SSB (e.g. spatial domain filter configuration, etc.). In this case, a time period in which use of the on-demand SSB as the QCL source is valid may be limited. That is, the UE may use the on-demand SSB as the QCL source during a configured or determined time period, and when the time period elapses, may use the previously used signal again as the QCL source.

As described with reference to FIG. 21, the on-demand SSB transmitted in the SSB-less cell may be used as the QCL source. Here, using the on-demand SSB as the QCL source may be understood as that a value indicating the QCL source in the channel relevance parameter is the same but an interpretation method of the value is different. In other words, a difference between using a signal other than the on-demand SSB as the QCL source and using the on-demand SSB as the QCL source may lie in an interpretation method of the value indicating the QCL source in the channel relevance parameter.

Alternatively, using the on-demand SSB as the QCL source may be understood as that a value indicating the QCL source in the channel relevance parameter is configured as at least one of values for the on-demand SSB. In other words, a difference between using a signal other than the on-demand SSB as the QCL source and using the on-demand SSB as the QCL source may lie in a range or candidates of the value indicating the QCL source in the channel relevance parameter. Accordingly, in order to change a signal used as the QCL source, the UE may receive configuration information on a channel relevance parameter referring to the on-demand SSB as the QCL source.

FIG. 22 illustrates an example of a procedure for receiving a signal by using a QCL assumption in a wireless communication system according to one embodiment of the present disclosure. FIG. 22 illustrates a method performed by the UE. In the following description, the QCL source may be referred to as a reference signal.

Referring to FIG. 22, in step S2201, the UE receives configuration information related to TCI. Here, the configuration information may include a first signal as information related to QCL for signal transmission and/or reception in a first cell. Also, the first signal may include one of a signal other than the on-demand SSB on the first cell or a signal on a second cell different from the first cell.

In step S2203, the UE receives a downlink signal or channel on the first cell by applying a QCL assumption of the first signal or a second signal based on whether the on-demand SSB on the first cell is received. For example, the UE may check at least one of that the on-demand SSB is transmitted, that transmission of the on-demand SSB is maintained for at least a threshold time, and that transmission of the on-demand SSB is performed at least a threshold number of times, and may receive the downlink signal or channel on the first cell by applying a QCL assumption of the on-demand SSB. On the other hand, if the on-demand SSB is not transmitted, the UE may apply the QCL assumption of the first signal.

Hereinafter, the present disclosure describes various embodiments related to configuration of the channel relevance parameter in the SSB-less cell.

(Embodiment #3-1) The UE may use, as the QCL source, a downlink signal or uplink signal other than the SSB on the SSB-less cell (e.g. another signal on the SSB-less cell or a signal on another cell), and may temporarily use the on-demand SSB as the QCL source while receiving the on-demand SSB from the corresponding SSB-less cell or after receiving the on-demand SSB. In this case, the corresponding rule may be applied only when a downlink RS configured as the QCL source in addition to the SSB on the SSB-less cell is an SSB. In other words, when the downlink RS configured as the QCL source in addition to the SSB on the SSB-less cell is an SSB, configuration of the channel relevance parameter (e.g. QCL, TCI, and/or spatial relation information) using the on-demand SSB on the SSB-less cell may be allowed in a limited manner.

(Embodiment #3-2) When the UE receives the on-demand SSB received from the corresponding SSB-less cell for longer than a time period of length T or receives the SSB in T or more time occasions, the UE may temporarily use the on-demand SSB on the SSB-less cell as the QCL source. Here, the value of T may be pre-defined or may be configured or indicated by the base station.

(Embodiment #3-3) Whether the QCL source is changed according to whether the on-demand SSB on the SSB-less cell is transmitted may be configurable. That is, the UE may receive configuration information related to whether to use the on-demand SSB as the QCL source based on a change in a situation related to the on-demand SSB.

(Embodiment #3-4) Channel relevance parameters may be managed as a list or set. In this case, a list or set of the channel relevance parameters may be differently interpreted according to the used QCL source, or different lists or different sets may be used.

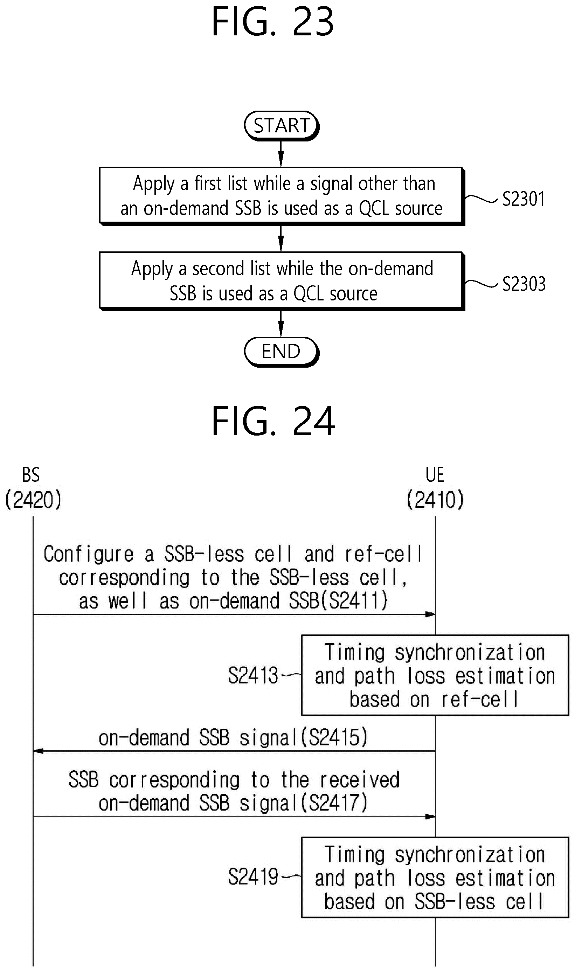

FIG. 23 illustrates an example of a procedure for applying a channel relevance parameter based on a QCL source in a wireless communication system according to one embodiment of the present disclosure. FIG. 23 illustrates a method performed by the UE.

Referring to FIG. 23, in step S2301, the UE applies a first list while a signal other than the on-demand SSB is used as the QCL source. Here, the first list includes a correspondence relationship between indexes of channel relevance parameters and signals used as the QCL source. That is, each of the indexes of the channel relevance parameters is linked with one of the signals used as the QCL source, and the first list expresses linkage between an index of a channel relevance parameter and a signal used as the QCL source. Accordingly, when an index of a specific channel relevance parameter is configured for a signal transmitted or received by the UE, the UE may determine that the configured index and a signal linked to the configured index and the corresponding transmitted or received signal have a QCL relationship. In this case, the UE checks a signal linked to the configured index based on the first list.

In step S2303, the UE applies a second list while the on-demand SSB is used as the QCL source. Here, the second list includes a correspondence relationship between indexes of channel relevance parameters and signals used as the QCL source, and may express linkage with a QCL source different from the first list. That is, the second list may be a list generated by using the on-demand SSB as the QCL source. Accordingly, when an index of a specific channel relevance parameter is configured for a signal transmitted or received by the UE, the UE checks a signal linked to the index based on the second list, and may determine that the checked signal and the corresponding transmitted or received signal have a QCL relationship.

More specific examples for the embodiment described with reference to FIG. 23 are as follows.

Sets of different TCI states/TCI uplink states/spatial relation information values may be configured, and one of the sets may be adaptively applied according to whether the on-demand SSB from the SSB-less cell is received. Specifically, with respect to TCI states/TCI uplink states/spatial relation information values managed as a list (e.g. tci-StatesPDCCH-ToAddList, tci-StatesToAddModList, DL-OrJointTCI-StateToAddModList, ul-TCI-ToAddModList, spatialRelationInfoToAddModList), a plurality of lists may be configured, and another list may be activated according to whether the on-demand SSB from the SSB-less cell is received. In this case, a TCI state index/TCI uplink state index/spatial relation information index is determined based on the activated list, and a value corresponding to the determined index may be applied to a corresponding downlink signal, uplink signal, and/or channel. For this, according to one embodiment, the UE may receive, from the base station, configuration information related to, as lists of channel relevance parameters, a first list for a first case in which a signal other than the on-demand SSB is used as the QCL source, and a second list for a second case in which the on-demand SSB is used as the QCL source.

Alternatively, a list of TCI states/TCI uplink states/spatial relation information values may be maintained as a single list, and components included in the list may be differently configured and applied according to whether the on-demand SSB from the SSB-less cell is received. For example, TCI state index(es) linked with a PDSCH may be configured or indicated through RRC signaling and/or MAC CE, and the UE may apply different TCI state indexes to receive the corresponding PDSCH according to whether the on-demand SSB is received. For example, TCI state index(es) corresponding to each code-point of a field indicating TCI in a DCI format may be differently configured or indicated according to whether the on-demand SSB is received. Specifically, if TCI state indexes {#0, #2, #4} are mapped to respective code-points in case #A, and TCI state indexes {#1, #3, #5} are mapped to respective code-points in case #B, in interpreting the TCI field in the corresponding DCI format, the UE may assume that TCI state indexes {#0, #2, #4} are mapped to the respective code-points in case #A, and may assume that TCI state indexes {#1, #3, #5} are mapped to the respective code-points in case #B. The mapping relationship between the code-point and the TCI state index may be indicated through a common MAC CE or through each MAC CE for each case. Here, case #A may be during reception of the on-demand SSB from the corresponding SSB-less cell or after reception of the on-demand SSB, and case #B may mean the remaining situation.

(Embodiment #3-5) In the present disclosure, a signal other than the on-demand SSB may mean another SSB transmitted on the same cell. For example, there may exist SSB #1 transmitted with a periodicity of P1 ms in a certain cell, and SSB #2 transmitted with a periodicity of P2 ms in the corresponding cell may be indicated through DCI / MAC-CE / RRC signaling, etc. Here, P2 may have a value smaller than P1. That is, in this case, the signal other than the on-demand SSB may be referred to as SSB #1, and the SSB of the SSB-less cell may be referred to as SSB #2.

Specifically, while using SSB #1 as the QCL source, the UE checks satisfaction of a condition for whether SSB #2 may be used as the QCL source. For example, the condition may include at least one of that SSB #2 is transmitted, that transmission of SSB #2 is maintained for at least a threshold time, that transmission of SSB #2 is performed at least a threshold number of times, and that use of SSB #2 as the QCL source is configured and/or activated. Based on satisfaction of the condition for using SSB #2 as the QCL source, the UE may use SSB #2 or SSB #2 and SSB #1 as the QCL source. In this case, a time period in which the operation using SSB #2 as the QCL source is valid may be limited. That is, the UE may use SSB #2 as the QCL source during a configured or determined time period, and when the time period elapses, may use SSB #1 previously used as the QCL source.

### [Blank]

### [Embodiment #4] Method for CSI reporting for an SSB-less cell when the corresponding cell is activated

According to clause 4.3 of TS 38.213, when an SCell is activated, CSI reporting for the corresponding SCell should be performed when a specific time (e.g. 3 msec or 3 msec + 1 slot) elapses after reception of a MAC-CE indicating activation and transmission of HARQ-ACK corresponding thereto. However, in the case of an SSB-less cell, since an SSB may not be transmitted, it may be allowed that CSI reporting is not performed for the corresponding cell even after activation thereof. In this case, the base station may indirectly determine a channel state of the corresponding SSB-less cell by using CSI reporting in a reference-cell.

In other words, even when a certain SCell is configured or indicated to operate as an SSB-less cell and the corresponding SCell is activated through a MAC-CE, the UE may not perform CSI reporting for the corresponding SSB-less cell. Alternatively, whether CSI reporting is performed for the corresponding SSB-less cell after activation may be pre-configured. Alternatively, whether CSI reporting is performed for the corresponding SSB-less cell after activation may be indicated by a MAC-CE indicating activation, another MAC-CE, or DCI.

Even when CSI reporting is not performed for the corresponding SSB-less cell after activation, CSI reporting for the corresponding SSB-less cell may be performed after the UE receives the on-demand SSB. Alternatively, CSI reporting for the corresponding SSB-less cell may be performed after separate configuration or indication is received.

### [Blank]

FIG. 24 illustrates an example of a procedure for utilizing an on-demand SSB in an SSB-less cell in a wireless communication system according to one embodiment of the present disclosure. FIG. 24 illustrates signal exchange between a UE (2310) and a base station (2320).

Referring to FIG. 24, in step S2401, the base station (2420) may configure an SSB-less cell, a reference-cell, an on-demand SSB, and the like. In step S2403, the UE (2410) performs timing information acquisition and/or path-loss estimation based on the reference-cell. In step S2405, the UE (2410) may select and transmit one of configured on-demand SSB signals. Accordingly, the base station (2420) receives the corresponding on-demand SSB signal. Thereafter, in step S2407, the base station (2420) transmits a corresponding SSB signal. In this case, as in the above-described [Embodiment #1] and/or [Embodiment #2], in step S2409, the UE (2410) may perform timing information and/or path-loss estimation based on the SSB-less cell instead of the reference-cell.

### [Blank]

When there are a plurality of frequency bands operated by the base station, for an NES purpose, the base station may periodically transmit only an SSB and/or system information in a specific frequency band, and may not periodically transmit the corresponding signal and/or channel in remaining frequency bands. While supporting such an operation of the base station, in order to support stable communication of the UE in the corresponding frequency band, the present disclosure proposes embodiments for operations based on an on-demand SSB, specifically, various functions using an on-demand SSB transmitted on an SSB-less cell.

In the SSB-less cell, the on-demand SSB may be transmitted according to a request of the UE or a determination of the base station. In this case, even in a cell supporting the on-demand SSB, an SSB that is different from the on-demand SSB and is in an always-on state (hereinafter, 'default SSB') may be transmitted. In this case, the base station may transmit the default SSB in the corresponding cell and may additionally transmit the on-demand SSB according to a request of the UE or a determination of the base station. That is, the SSB-less cell refers to the corresponding cell from a viewpoint of the on-demand SSB, and even if the default SSB is transmitted, when there exists a state in which the on-demand SSB is not transmitted at a specific time point, the corresponding cell may be referred to as the SSB-less cell.

Accordingly, the above-described embodiments applied to the SSB-less cell may be similarly applied to a cell that transmits the default SSB and supports the on-demand SSB. In this case, in the above-described various embodiments, the reference-cell and the SSB-less cell may be understood as one cell supporting the on-demand SSB, and a signal of the reference-cell may be replaced with the default SSB of the cell supporting the on-demand SSB.

### [Blank]

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

### INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method, comprising:
receiving configuration information related to a transmission configuration indication (TCI), wherein the configuration information includes a first signal as information related to quasi-colocation (QCL);
receiving a second signal on a first cell; and
receiving a downlink signal or channel on the first cell by applying a QCL assumption of the second signal,
wherein the second signal includes an on-demand synchronization signal/physical broadcast channel block (SSB) on the first cell.

2. The method of claim 1, wherein the first signal includes one of a signal other than the second signal on the first cell or a signal on a second cell.

3. The method of claim 1, wherein the receiving of the downlink signal or channel on the first cell by applying the QCL assumption of the second signal includes, based on at least one of the second signal being transmitted on the first cell, transmission of the second signal being maintained for at least a threshold time, or transmission of the second signal being performed at least a threshold number of times, receiving the downlink signal or channel on the first cell by applying the QCL assumption of the second signal.

4. The method of claim 1, further comprising: receiving configuration information related to whether to apply the QCL assumption of the second signal based on reception of the second signal.

5. The method of claim 1, wherein, based on the first signal including an SSB on the second cell, the receiving of the downlink signal or channel on the first cell by applying the QCL assumption of the second signal includes applying the QCL assumption of the second signal.

6. The method of claim 1, wherein the first signal includes at least one SSB on the first cell, and the at least one SSB is configured to be transmitted with a relatively longer periodicity than the on-demand SSB.

7. The method of claim 1, wherein the receiving of the downlink signal or channel on the first cell by applying the QCL assumption of the second signal includes applying TCI (transmission configuration information) information or spatial relation information included in a list configured for the second signal to a signal.

8. The method of claim 1, further comprising: receiving configuration information related to a first list of TCI states for a first case in which the QCL assumption of the first signal is applied and a second list of TCI states for a second case in which the QCL assumption of the second signal is applied.

9. The method of claim 1, wherein the receiving of the downlink signal or channel on the first cell by applying the QCL assumption of the second signal includes applying TCI information identified based on a mapping relationship between code-points of a TCI field of downlink control information (DCI) and TCI state indexes, which is defined for the second signal.

10. The method of claim 1, comprising: obtaining time synchronization by using a signal on a reference-cell for the first cell; and based on reception of the second signal, obtaining time synchronization by using the on-demand SSB on the first cell.

11. The method of claim 1, comprising: estimating a path-loss by using a signal on a reference-cell for the first cell; and based on reception of the second signal, estimating the path-loss by using the on-demand SSB on the first cell.

12. The method of claim 1, further comprising: receiving a message related to activation of the first cell; and after receiving the on-demand SSB of the first cell, transmitting channel state information (CSI) reporting for the first cell.

13. A method, comprising:
transmitting configuration information related to a transmission configuration indication (TCI), wherein the configuration information includes a first signal as information related to quasi-colocation (QCL); and
based on transmission of a second signal on a first cell, by applying a QCL assumption of the second signal, transmitting a downlink signal or channel on the first cell,
wherein the second signal includes an on-demand synchronization signal/physical broadcast channel block (SSB) on the first cell.

14. The method of claim 13, wherein the first signal includes one of a signal other than the second signal on the first cell or a signal on a second cell.

15. The method of claim 13, wherein the receiving of the downlink signal or channel on the first cell by applying the QCL assumption of the second signal includes, based on at least one of the second signal being transmitted on the first cell, transmission of the second signal being maintained for at least a threshold time, or transmission of the second signal being performed at least a threshold number of times, receiving the downlink signal or channel on the first cell by applying the QCL assumption of the second signal.

16. The method of claim 13, wherein, based on the first signal including an SSB on the second cell, the receiving of the downlink signal or channel on the first cell by applying the QCL assumption of the second signal includes applying the QCL assumption of the second signal.

17. The method of claim 13, wherein the first signal includes at least one SSB on the first cell, and the at least one SSB is configured to be transmitted with a relatively longer periodicity than the on-demand SSB.

18. The method of claim 13, further comprising: receiving configuration information related to a first list of TCI states for a first case in which the QCL assumption of the first signal is applied and a second list of TCI states for a second case in which the QCL assumption of the second signal is applied.

19. An apparatus, comprising:
a transceiver; and
a processor connected to the transceiver,
wherein the processor is configured to:
receive configuration information related to a transmission configuration indication (TCI), wherein the configuration information includes a first signal as information related to quasi-colocation (QCL),
receive a second signal on a first cell, and
receive a downlink signal or channel on the first cell by applying a QCL assumption of the second signal,
wherein the second signal includes an on-demand synchronization signal/physical broadcast channel block (SSB) on the first cell.

20. An apparatus, comprising:
a transceiver; and
a processor connected to the transceiver,
wherein the processor is configured to:
transmit configuration information related to a transmission configuration indication (TCI), wherein the configuration information includes a first signal as information related to quasi-colocation (QCL), and
based on transmission of a second signal on a first cell, by applying a QCL assumption of the second signal, transmit a downlink signal or channel on the first cell,
wherein the second signal includes an on-demand synchronization signal/physical broadcast channel block (SSB) on the first cell.

21. A user equipment (UE), comprising:
at least one processor; and
at least one memory connected to the at least one processor and storing instructions that, when executed by the at least one processor, cause the UE to perform operations,
wherein the operations comprise:
receiving configuration information related to a transmission configuration indication (TCI), wherein the configuration information includes a first signal as information related to quasi-colocation (QCL);
receiving a second signal on a first cell; and
receiving a downlink signal or channel on the first cell by applying a QCL assumption of the second signal,
wherein the second signal includes an on-demand synchronization signal/physical broadcast channel block (SSB) on the first cell.

22. A non-transitory computer-readable medium (CRM) storing at least one program instruction,
wherein the at least one program instruction, when executed by at least one processor, causes a UE to perform operations,
wherein the operations comprise:
receiving configuration information related to a transmission configuration indication (TCI), wherein the configuration information includes a first signal as information related to quasi-colocation (QCL);
receiving a second signal on a first cell; and
receiving a downlink signal or channel on the first cell by applying a QCL assumption of the second signal,
wherein the second signal includes an on-demand synchronization signal/physical broadcast channel block (SSB) on the first cell.
